# EUROPEAN PATENT APPLICATION

(11) **EP 4 607 465 A1**
(43) Date of publication of application: **27.08.2025**
(21) Application number: 23879578.5
(22) Date of filing: 02.10.2023
(51) Int. Cl.: G06T 9/00, G06T 17/20, H04N 19/597, H04N 19/85

(54) **INFORMATION PROCESSING DEVICE AND METHOD**

(30) Priority: 18.10.2022 JP 2022166711
(71) Applicant: Sony Group Corporation, Tokyo 108-0075 (JP)
(72) Inventor: KUMA Satoru, Tokyo 108-0075 (JP); HAYASHI Kao, Tokyo 108-0075 (JP); KATO Tsuyoshi, Tokyo 108-0075 (JP)
(74) Representative: D Young & Co LLP
(86) International application number: PCT/JP2023/035840
(87) International publication number: WO 2024/084931

(57) **Abstract**

The present disclosure relates to an information processing device and method for making it possible to suppress a decrease in coding efficiency.

Coded data regarding a base mesh is decoded, coded data regarding a displacement video including, as frames, 2D images storing local coordinates as displacement vectors is decoded, vertex normal vectors, which are normal vectors of vertices of a subdivided base mesh, are derived, and local coordinates of the vertices of the subdivided base mesh are applied to the vertices as displacement vectors using local coordinate systems corresponding to the vertex normal vectors. The present disclosure can be applied to, for example, an information processing device, an electronic device, an information processing method, a program, or the like.

## Description

### TECHNICAL FIELD

The present disclosure relates to an information processing device and method, and more particularly, relates to an information processing device and method capable of suppressing a decrease in coding efficiency.

### BACKGROUND ART

As a method for coding a mesh, which is 3D data representing a three-dimensional structure of an object using vertices and connections, there has conventionally been video-based dynamic mesh coding (V-DMC) (see, for example, Non-Patent Document 1). In V-DMC, a mesh to be coded is represented by a coarse base mesh and displacement vectors of subdivision points obtained by subdividing the base mesh, and the base mesh and the displacement vectors are coded. The displacement vectors are stored (packed) in a two-dimensional image, and are coded as a moving image (displacement video) including such two-dimensional images as frames.

As a coordinate system representing a displacement vector in a case where the displacement vector is stored in a two-dimensional image, for example, there is a local coordinate system set for each vertex (for each displacement vector). Common coordinate systems need to be employed in an encoder and a decoder, but local coordinate systems are not explicitly transmitted. An encoder and a decoder conventionally set a local coordinate system using similar methods with reference to a normal vector of each vertex used for shadow processing and the like at a time of rendering.

This normal vector is derived by an "interpolated method" so as to be suitable for the shadow processing and the like at the time of rendering. In the interpolated method, first, normal vectors of vertices of a base mesh are derived, and then normal vectors of subdivision points are derived using the normal vectors. At this time, the normal vectors of the vertices of the base mesh are weighted in accordance with positions of subdivision points (the number of subdivisions), and normal vectors of the subdivision points are derived through weighted averaging. By this method, even when a plurality of subdivision points is formed between vertices of the base mesh, a direction of the normal vector of each subdivision point can be changed. By employing the normal vectors in the shadow processing and the like, therefore, an independent processing result can be derived for each vertex, and a higher-definition processing result can be obtained.

### CITATION LIST

### NON-PATENT DOCUMENT

Non-Patent Document 1: Khaled Mammou, Jungsun Kim, Alexis Tourapis, Dimitri Podborski, Krasimir Kolarov, "[V-CG] Apple's Dynamic Mesh Coding CfP Response", ISO/IEC JTC 1/SC 29/WG 7 m59281, April 2022

### SUMMARY OF THE INVENTION

### PROBLEMS TO BE SOLVED BY THE INVENTION

By the way, this local coordinate system controls a quantized value of a displacement vector for each axis. That is, what kind of coordinate system is used as the local coordinate system affects quality of the displacement vector (that is, a mesh to be reconstructed). Furthermore, by determining a local coordinate system to be employed, a displacement vector (local coordinates) represented by the local coordinate system is determined. That is, the amount of information (that is, the amount of coding) of (frame images of) a displacement video can also change depending on what kinds of local coordinate systems are employed. That is, what kinds of local coordinate systems are employed affects the coding efficiency.

What kinds of local coordinate systems should be employed in order to improve the coding efficiency, however, depends on various factors including, for example, a shape of an object. As described above, therefore, normal vectors derived by the "interpolated method" are not always optimal for derivation of local coordinate systems for representing displacement vectors at a time of coding. In other words, by diverting normal vectors for rendering to the derivation of local coordinate systems, quality of displacement vectors might decrease or the amount of information of a displacement video might increase, and accordingly the coding efficiency might decrease.

The present disclosure has been made in view of such circumstances, and an object thereof is to make it possible to suppress a decrease in coding efficiency.

### SOLUTIONS TO PROBLEMS

An information processing device according to an aspect of the present technology is an information processing device including a base mesh decoding unit that decodes coded data regarding a base mesh, a displacement video decoding unit that decodes coded data regarding a displacement video including, as frames, 2D images storing local coordinates as displacement vectors, a vertex normal vector derivation unit that derives vertex normal vectors, which are normal vectors of vertices of the subdivided base mesh, and a displacement vector application unit that applies the local coordinates of the vertices to the vertices of the subdivided base mesh as the displacement vectors using local coordinate systems corresponding to the vertex normal vectors. The base mesh is a mesh that is generated by decimating vertices of an original mesh to be coded including the vertices and connections representing a three-dimensional structure of an object and that is coarser than the original mesh. The displacement vectors are differences in position between the vertices of the subdivided base mesh and the vertices of the original mesh. The local coordinate systems are coordinate systems for each of the vertices of the subdivided base mesh set on the basis of the vertex normal vectors. The local coordinates are coordinates representing the displacement vectors of the vertices of the subdivided base mesh in the local coordinate systems corresponding to the vertex normal vectors of the vertices.

An information processing method according to an aspect of the present technology is an information processing method including
decoding coded data regarding a base mesh, decoding coded data regarding a displacement video including, as frames, 2D images storing local coordinates as displacement vectors, deriving vertex normal vectors, which are normal vectors of vertices of the subdivided base mesh, and applying the local coordinates of the vertices to the vertices of the subdivided base mesh as the displacement vectors using local coordinate systems corresponding to the vertex normal vectors. The base mesh is a mesh that is generated by decimating vertices of an original mesh to be coded including the vertices and connections representing a three-dimensional structure of an object and that is coarser than the original mesh. The displacement vectors are differences in position between the vertices of the subdivided base mesh and the vertices of the original mesh. The local coordinate systems are coordinate systems for each of the vertices of the subdivided base mesh set on the basis of the vertex normal vectors. The local coordinates are coordinates representing the displacement vectors of the vertices of the subdivided base mesh in the local coordinate systems corresponding to the vertex normal vectors of the vertices.

An information processing device according to another aspect of the present technology is an information processing device including a derivation method setting section that sets a method of deriving vertex normal vectors, which are normal vectors of vertices of a subdivided base mesh, a vertex normal vector derivation unit that derives the vertex normal vectors by the set derivation method, a local coordinate derivation unit that derives local coordinates representing displacement vectors in local coordinate systems corresponding to the vertex normal vectors, a displacement video coding unit that codes a displacement video including, as frames, 2D images storing the local coordinates as the displacement vectors, a method designation flag generation unit that generates a method designation flag which designates the set derivation method, and a method designation flag coding unit that codes the method designation flag. The base mesh is a mesh that is generated by decimating vertices of an original mesh to be coded including the vertices and connections representing a three-dimensional structure of an object and that is coarser than the original mesh. The displacement vectors are differences in position between the vertices of the subdivided base mesh and the vertices of the original mesh. The local coordinate systems are coordinate systems for each of the vertices of the subdivided base mesh set on the basis of the vertex normal vectors.

An information processing method according to another aspect of the present technology is an information processing method including setting a method for deriving vertex normal vectors, which are normal vectors of vertices of a subdivided base mesh, deriving the vertex normal vectors by the set derivation method, deriving local coordinates representing displacement vectors in local coordinate systems corresponding to the vertex normal vectors, coding a displacement video including, as frames, 2D images storing the local coordinates as the displacement vectors, generating a method designation flag that designates the set derivation method, and coding the method designation flag. The base mesh is a mesh that is generated by decimating vertices of an original mesh to be coded including the vertices and connections representing a three-dimensional structure of an object and that is coarser than the original mesh. The displacement vectors are difference in position between the vertices of the subdivided base mesh and the vertices of the original mesh. The local coordinate systems are coordinate systems for each of the vertices of the subdivided base mesh set on the basis of the vertex normal vectors.

In an information processing device and method according to an aspect of the present technology, coded data regarding a base mesh is decoded, coded data regarding a displacement video including, as frames, 2D images storing local coordinates as displacement vectors is decoded, vertex normal vectors, which are normal vectors of vertices of a subdivided base mesh, are derived, and local coordinates of the vertices of the subdivided base mesh are applied to the vertices as displacement vectors using local coordinate systems corresponding to the vertex normal vectors.

In an information processing device and method according to another aspect of the present technology, a method for deriving vertex normal vectors, which are normal vectors of vertices of a subdivided base mesh, is set, the vertex normal vectors are derived by the set derivation method, local coordinates representing displacement vectors are derived in local coordinate systems corresponding to the vertex normal vectors, a displacement video including, as frames, 2D image storing the local coordinates as the displacement vectors is coded, a method designation flag that designates the set derivation method is generated, and the method designation flag is coded.

### BRIEF DESCRIPTION OF DRAWINGS

Fig. 1 is a diagram for explaining V-DMC.
Fig. 2 is a diagram for explaining displacement vectors.
Fig. 3 is a diagram for explaining a displacement video.
Fig. 4 is a diagram for explaining an example of a method for deriving normal vectors.
Fig. 5 is another diagram for explaining the example of the method for deriving normal vectors.
Fig. 6 is a diagram illustrating an example of a coding method.
Fig. 7 is a diagram for explaining an example of a non-interpolated method.
Fig. 8 is a diagram for explaining another example of the non-interpolated method.
Fig. 9 is a diagram for explaining an example of a method for selecting a derivation method.
Fig. 10 is a diagram for explaining an example of weight values.
Fig. 11 is a diagram for explaining an example of clustering.
Fig. 12 is a diagram for explaining an example of quantization.
Fig. 13 is a block diagram illustrating a main configuration example of a coding device.
Fig. 14 is a block diagram illustrating a main configuration example of a local coordinate system setting unit.
Fig. 15 is a flowchart illustrating an example of a flow of a coding process.
Fig. 16 is a flowchart illustrating an example of a flow of a process for setting local coordinate systems.
Fig. 17 is a flowchart illustrating another example of the flow of the process for setting local coordinate systems.
Fig. 18 is a flowchart illustrating another example of the flow of the process for setting local coordinate systems.
Fig. 19 is a block diagram illustrating a main configuration example of a decoding device.
Fig. 20 is a block diagram illustrating a main configuration example of another local coordinate system setting unit.
Fig. 21 is a flowchart for explaining an example of a flow of a decoding process.
Fig. 22 is a flowchart illustrating another example of the flow of the process for setting local coordinate systems.
Fig. 23 is a flowchart illustrating another example of the flow of the process for setting local coordinate systems.
Fig. 24 is a flowchart illustrating another example of the flow of the process for setting local coordinate systems.
Fig. 25 is a block diagram illustrating another main configuration example of the local coordinate system setting unit.
Fig. 26 is a flowchart illustrating another example of the flow of the process for setting local coordinate systems.
Fig. 27 is a block diagram illustrating another main configuration example of the another local coordinate system setting unit.
Fig. 28 is a flowchart illustrating another example of the flow of the process for setting local coordinate systems.
Fig. 29 is a block diagram illustrating another main configuration example of the local coordinate system setting unit.
Fig. 30 is a flowchart illustrating another example of the flow of the process for setting local coordinate systems.
Fig. 31 is a block diagram illustrating another main configuration example of the another local coordinate system setting unit.
Fig. 32 is a flowchart illustrating another example of the flow of the process for setting local coordinate systems.
Fig. 33 is a block diagram illustrating another main configuration example of the local coordinate system setting unit.
Fig. 34 is a flowchart illustrating another example of the flow of the process for setting local coordinate systems.
Fig. 35 is a block diagram illustrating another main configuration example of the another local coordinate system setting unit.
Fig. 36 is a flowchart illustrating another example of the flow of the process for setting local coordinate systems.
Fig. 37 is a block diagram illustrating a main configuration example of a computer.

### MODE FOR CARRYING OUT THE INVENTION

A mode for carrying out the present disclosure (hereinafter referred to as an embodiment) will be described hereinafter. Note that the description will be made in the following order.
1. Documents and Like Supporting Technical Content and Technical Terms
2. Local Coordinate Systems
3. Local Coordinate Systems for Coding
4. Embodiment
5. Appendix

### <1. Documents and Like Supporting Technical Content and Technical Terms>

A scope disclosed in the present technology includes, in addition to contents described in the embodiment, contents described in a following Non-Patent Document and the like known at a time of filing, contents of other documents referred to in the following Non-Patent Document, and the like.

Non-Patent Document 1: (described above)

That is, the contents described in the above-described Non-Patent Document, the contents of other documents referred to in the above-described Non-Patent Document, and the like also serve as a basis for determining support requirements.

### <2. Local Coordinate Systems>

### <V-DMC>

As 3D data representing a three-dimensional structure of a three-dimensional structure (an object having a three-dimensional shape), a mesh representing three-dimensional shapes of surfaces of the object by forming polygons using vertices and connections is conventionally known. As a method for coding this mesh, for example, there is video-based dynamic mesh coding (V-DMC) as disclosed in Non-Patent Document 1.

In V-DMC, a mesh to be coded is represented by a coarse base mesh and displacement vectors of subdivision points obtained by subdividing the base mesh, and the base mesh and the displacement vectors are coded.

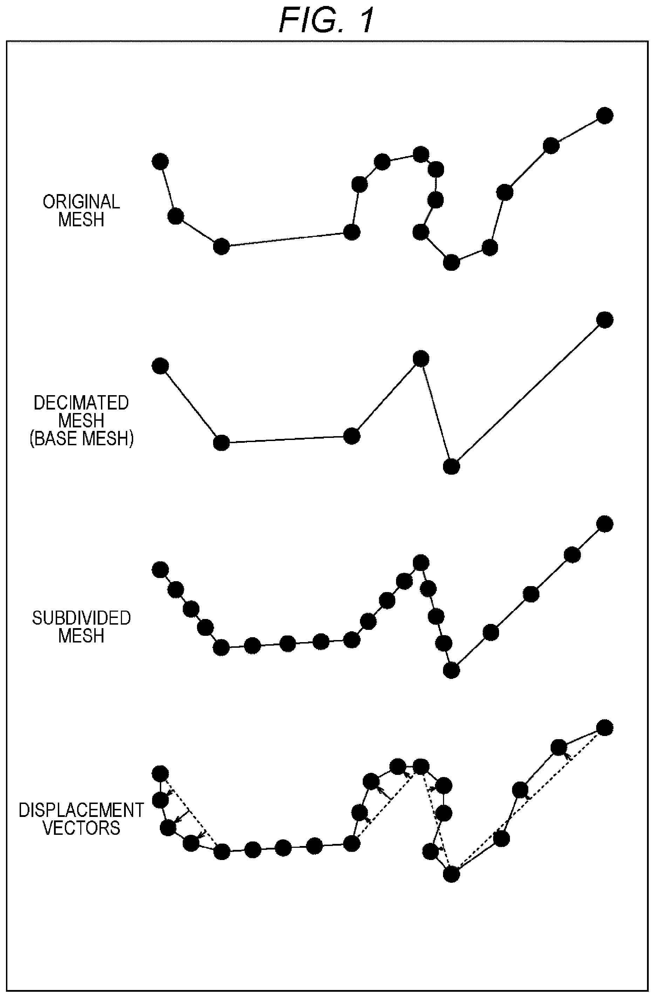

For example, it is assumed that there is an original mesh illustrated in an uppermost part of Fig. 1. In Fig. 1, black dots indicate vertices, and lines connecting the black dots indicate connections. As described above, a mesh originally forms polygons using vertices and connections, but here, a mesh is described as a group of vertices connected linearly (in series) to one another for convenience of description.

By decimating the vertices of the original mesh, a coarse mesh illustrated in a second part from a top of Fig. 1 is formed. This is used as a base mesh.

By subdividing each mesh of the base mesh, vertices are added as illustrated in a third part from the top in Fig. 1. It is assumed here that vertices as many as those thinned out from the original mesh are added through the subdivision. As a result, a mesh having the same number of vertices as the original mesh is obtained. In the present specification, the added vertices will also be referred to as subdivision points.

Since the connections are updated as a result of the decimation of the vertices of the original mesh and the subdivision points are formed on the updated connections, however, a shape of the subdivided base mesh is different from that of the original mesh. More specifically, as illustrated in a lowermost part of Fig. 1, positions of the subdivision points (on a dotted line) is different from those in the original mesh. In the present specification, differences between the positions of the subdivision points and the positions of the vertices of the original mesh will be referred to as displacement vectors.

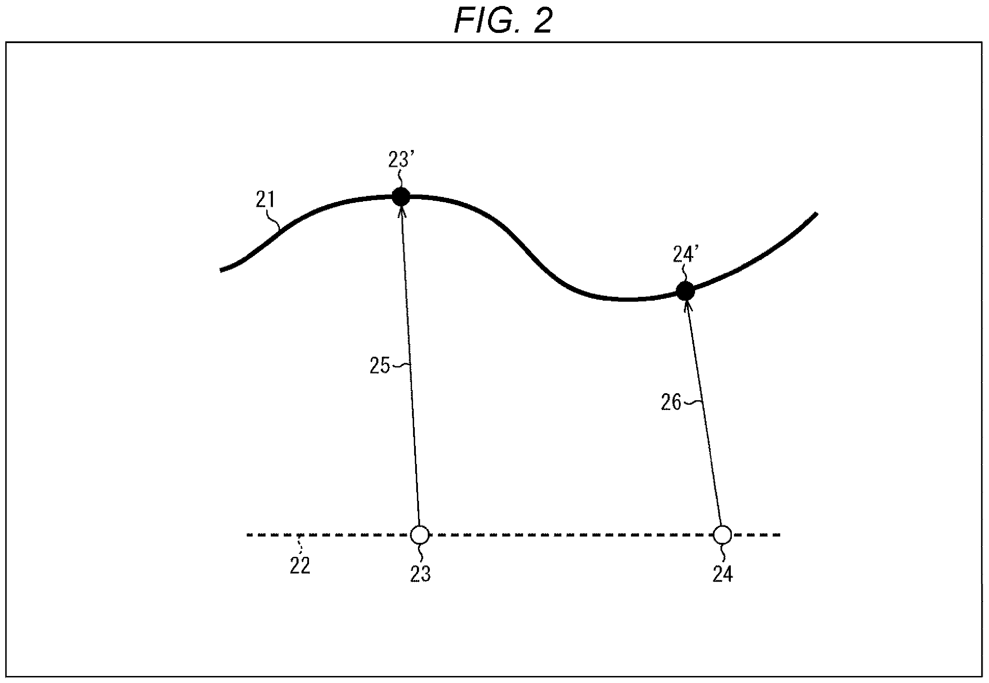

For example, it is assumed that an original mesh 21 and a subdivided base mesh 22 exist in a positional relationship illustrated in Fig. 2. It is also assumed that there are vertices 23 and 24 of the subdivided base mesh 22. In this case, as illustrated in Fig. 2, a position of the vertex 23 and a position of a vertex 23' of the original mesh 21 corresponding to the vertex 23 are different from each other. This difference is represented as a displacement vector (displacement vector 25). Similarly, a difference between a position of the vertex 24 and a position of a vertex 24' of the original mesh 21 corresponding to the vertex 24 is represented as a displacement vector 26. A displacement vector is thus set for each of vertices of a subdivided base mesh.

Since an original mesh is known in an encoder, a base mesh can be generated, and such displacement vectors can also be derived. A decoder can generate (restore) the original mesh (a mesh corresponding to the original mesh) by subdividing the base mesh and applying the displacement vector to each vertex.

By reducing the number of vertices of an original mesh and coding the original mesh as a base mesh, the amount of coding can be reduced. Furthermore, coding efficiency can be improved by storing displacement vectors in a two-dimensional image and coding the displacement vectors through 2D coding. In the present specification, storing data in a two-dimensional image will also be referred to as packing.

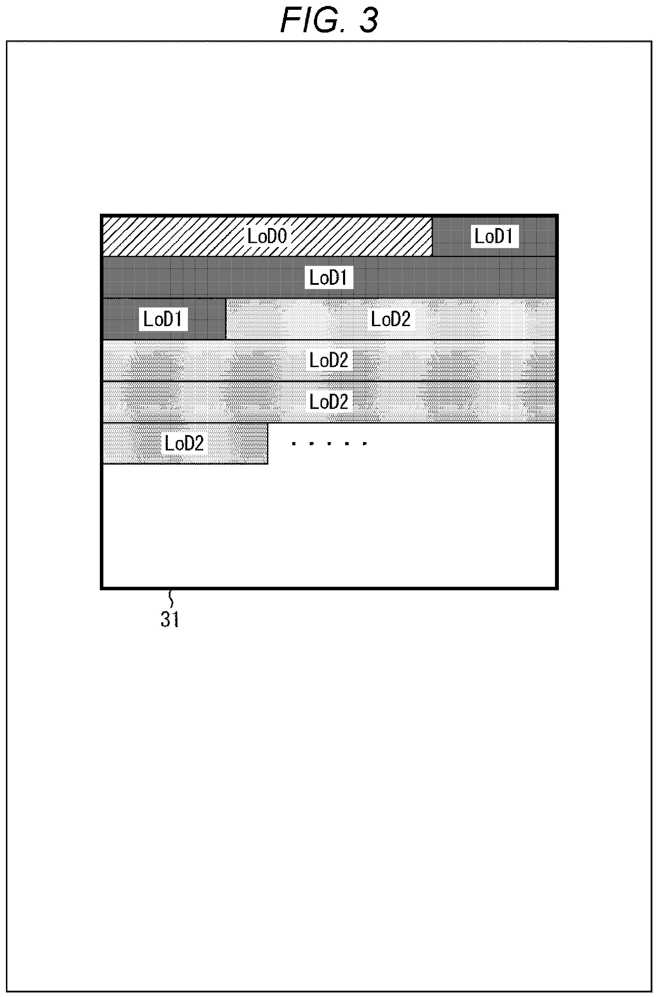

Note that V-DMC supports scalable decoding. As illustrated in Fig. 3, for example, displacement vectors are hierarchized for different levels of definition (the number of subdivisions of a base mesh) and packed in a two-dimensional image 31 as data for each level. In an example in Fig. 3, LoD0 packed in the two-dimensional image 31 indicates data regarding displacement vectors of vertices of an uppermost layer (lowest definition) among the displacement vectors of the vertices hierarchized for different levels of definition. Similarly, LoD1 indicates data regarding displacement vectors of vertices of a layer immediately above LoD0. LoD2 indicates data regarding displacement vectors of vertices of a layer immediately above LoD1. The displacement vectors are thus hierarchized (put together as data for different levels) and packed.

Note that the displacement vectors may be packed in a two-dimensional image as transform coefficients through a coefficient transform such as a wavelet transform. Furthermore, the displacement vectors may be quantized. For example, the displacement vectors may be converted into transform coefficients through a wavelet transform, the transform coefficients may be quantized, and the quantized transform coefficients (quantized coefficients) may be packed.

In addition, a three-dimensional shape of an object can change in a time direction. In the present specification, variability in the time direction will also be referred to as "dynamic". Meshes (that is, a base mesh and displacement vectors), therefore, are dynamic. For this reason, displacement vectors are coded as a moving image including two-dimensional images as frames. In the present specification, this moving image will also be referred to as a displacement video.

### <Setting Local Coordinate Systems>

Displacement vectors are represented as coordinates in arbitrary coordinate systems, and coordinate values are stored in a two-dimensional image. As such a coordinate system representing a displacement vector, for example, there is a local coordinate system set for each vertex (for each displacement vector). That is, each displacement vector is represented in a local coordinate system for the displacement vector. In the present specification, coordinates representing a displacement vector in this local coordinate system will also be referred to as local coordinates.

It is necessary to apply the same local coordinate system to the same displacement vector in an encoder and a decoder, but local coordinate systems are not explicitly transmitted from the encoder to the decoder. An encoder and a decoder conventionally set a local coordinate system using similar methods with reference to a normal vector of each vertex used for shadow processing and the like at a time of rendering. For example, a Cartesian coordinate system having the normal vector as one of axes is set as a local coordinate system. In the present specification, a normal vector of a vertex of a mesh will also be referred to as a vertex normal vector.

This vertex normal vector is derived by an "interpolated method" so as to be suitable for the shadow processing and the like at the time of rendering. In the interpolated method, first, vertex normal vectors of a base mesh are derived, and then vertex normal vectors of subdivision points are derived using the vertex normal vectors. At this time, the vertex normal vectors of the base mesh are weighted in accordance with positions of subdivision points (the number of subdivisions), and vertex normal vectors of the subdivision points are derived through weighted averaging. By this method, even when a plurality of subdivision points is formed between vertices of the base mesh, a direction of the vertex normal vector of each subdivision point can be changed.

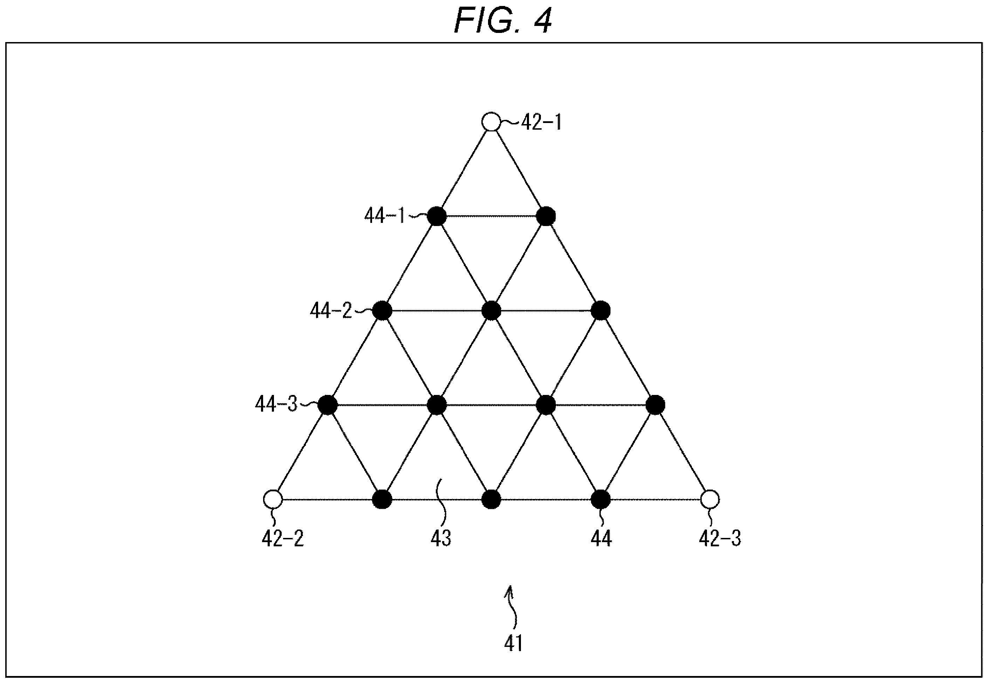

As illustrated in Fig. 4, for example, it is assumed that a face (polygon) whose edges are connections connecting vertexes 42-1 to 42-3 of a base mesh is subdivided, and subdivision points 44-1 to 44-3 are formed on an edge between the vertices 42-1 and 42-2. Vertex normal vectors of these vertices are derived on the basis of normal vectors of faces (also referred to as surrounding faces) including the vertices. In the "interpolated method", as described above, normal vectors of surrounding faces are weighted in accordance with positions of individual subdivision points (the number of subdivisions of a base mesh), and vertex normal vectors are derived through weighted averaging or the like.

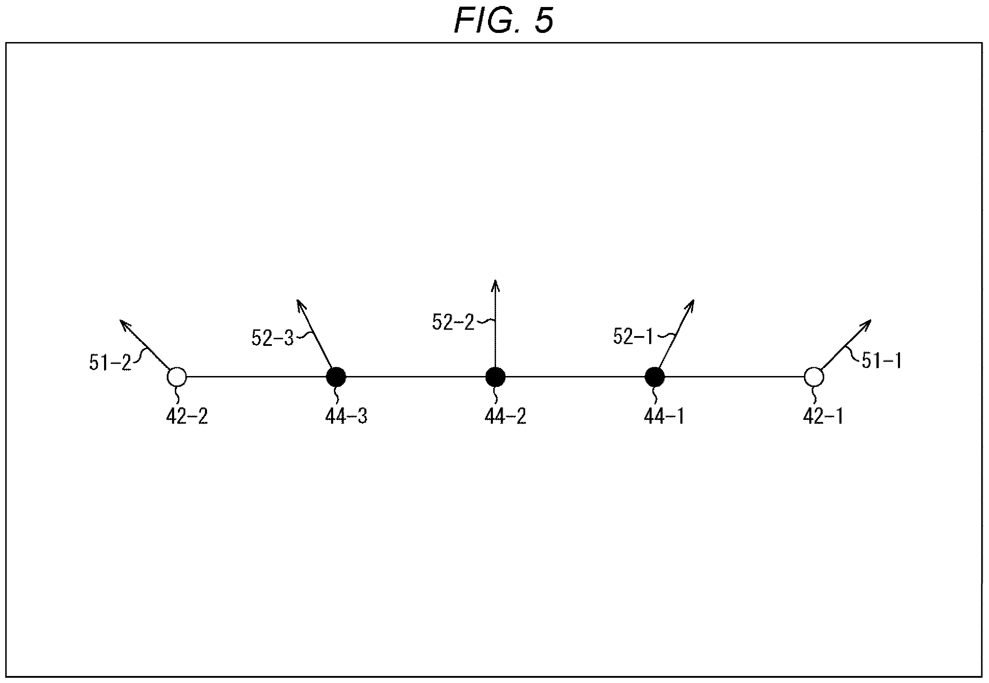

As illustrated in Fig. 5, therefore, a vertex normal vector 51-1 of the vertex 42-1, a vertex normal vector 52-1 of the subdivision point 44-1, a vertex normal vector 52-2 of the subdivision point 44-2, a vertex normal vector 52-3 of the subdivision point 44-3, and a vertex normal vector 51-2 of the vertex 42-2 might be oriented in different directions. By employing vertex normal vectors derived in this manner in the shadow processing and the like, therefore, an independent processing result can be derived for each vertex, and a higher-definition processing result can be obtained.

By the way, this local coordinate system controls a quantized value of a displacement vector for each axis. Quality of the displacement vector (that is, a mesh to be reconstructed), therefore, can vary depending on an orientation of a local coordinate system employed. Furthermore, local coordinates representing the displacement vector can change depending on the orientation of the local coordinate system employed.
That is, the amount of information (that is, the amount of coding) of (frame images of) a displacement video can also change depending on orientations of local coordinate systems employed. That is, the coding efficiency is affected by the orientations of the local coordinate systems employed.

The orientation of the local coordinate system to be employed in order to improve the coding efficiency, however, depends on various factors including, for example, a shape of an object. At least, employing local coordinate systems based on vertex normal vectors derived by the "interpolated method" as described above did not always yield the best coding efficiency. For example, since weighting is performed in accordance with positions of vertices, differences between derived directions of individual vertex normal vectors depend on a weighting method as in the example in Fig. 5. Such differences between directions of individual vertex normal vectors, however, are not necessarily optimal for representing individual displacement vectors.

In other words, by diverting normal vectors for rendering to the derivation of local coordinate systems, quality of displacement vectors might decrease or the amount of information of a displacement video might increase, and accordingly the coding efficiency might decrease.

### <3. Local Coordinate Systems for Coding>

### <Method 1>

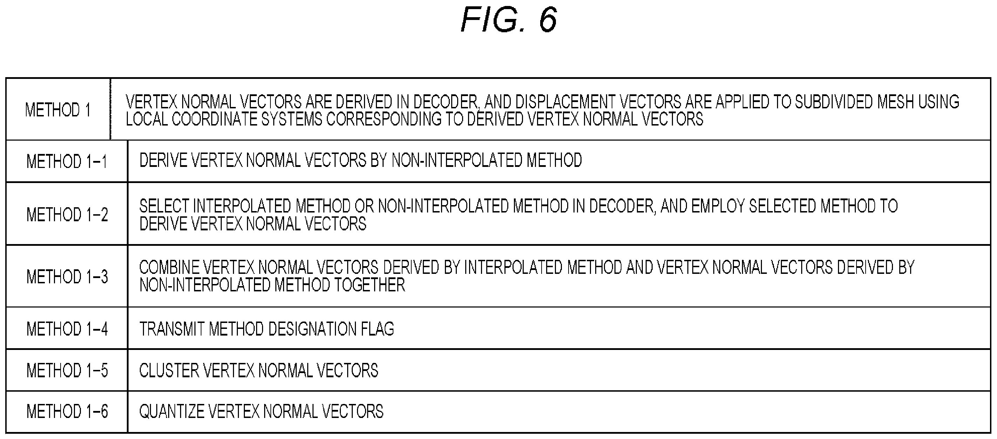

The encoder and the decoder, therefore, derive vertex normal vectors for setting local coordinate systems without using normal vectors for rendering. A derivation method is the same between the encoder and the decoder. That is, as illustrated in an uppermost row of a table in Fig. 6, the decoder derives vertex normal vectors, and displacement vectors are applied to a subdivided base mesh using local coordinate systems corresponding to the derived vertex normal vectors (Method 1).

For example, an information processing device (also referred to as a first information processing device) may include a base mesh decoding unit that decodes coded data regarding a base mesh, a displacement video decoding unit that decodes coded data regarding a displacement video including, as frames, 2D images storing local coordinates as displacement vectors, a vertex normal vector derivation unit that derives vertex normal vectors, which are normal vectors of vertices of a subdivided base mesh, and a displacement vector application unit that applies, to the vertices of the subdivided base mesh, local coordinates corresponding to the vertices as displacement vectors using local coordinate systems corresponding to the vertex normal vectors.

For example, in an information processing method performed by the first information processing device, coded data regarding a base mesh may be decoded, coded data regarding a displacement video including, as frames, 2D images storing local coordinates as displacement vectors may be decoded, vertex normal vectors, which are normal vectors of vertices of a subdivided base mesh, may be derived, and local coordinates corresponding to the vertices of the subdivided base mesh may be applied to the vertices as displacement vectors using local coordinate systems corresponding to the vertex normal vectors.

Note that the base mesh is a mesh that is generated by decimating vertices of an original mesh to be coded including the vertices and connections representing a three-dimensional structure of an object and that is coarser than the original mesh. The displacement vectors are differences in position between the vertices of the subdivided base mesh and the vertices of the original mesh. The local coordinate systems are coordinate systems for the individual vertices of the subdivided base mesh set on the basis of the vertex normal vectors. The local coordinates are coordinates representing the displacement vectors of the vertices of the subdivided base mesh in the local coordinate systems corresponding to the vertex normal vectors of the vertices.

By applying the local coordinates (displacement vectors) to the vertices of the base mesh, a mesh corresponding to the original mesh is reconstructed. That is, by doing so, the local coordinate systems can be set independently of the vertex normal vectors for rendering. A decrease in the coding efficiency, therefore, can be suppressed. In addition, since it is not necessary to change a method for deriving vertex normal vectors for rendering, it is possible to suppress a decrease in the coding efficiency without reducing quality of rendering such as shadow processing.

### <Method 1-1>

Any method may be used to derive the vertex normal vectors for setting the local coordinate systems. For example, as illustrated in a second row from a top of the table in Fig. 6, the vertex normal vectors may be derived by a "non-interpolated method" (Method 1-1). For example, in the first information processing device, the vertex normal vector derivation unit may derive vertex normal vectors of processing target points, which are processing target vertices of the subdivided base mesh, using normal vectors of surrounding faces of the processing target points.

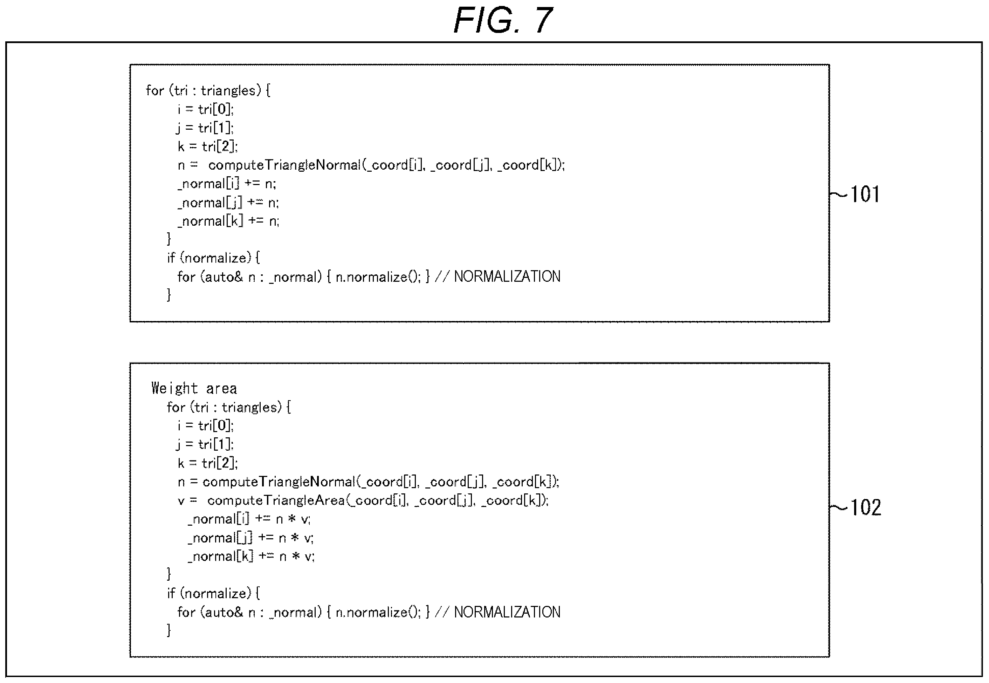

The non-interpolated method is a method for deriving vertex normal vectors without performing weighting according to positions of vertices in the above-described interpolated method. That is, vertices and subdivision points of a base mesh are derived in similar manners using normal vectors of surrounding faces. For example, as in a virtual program illustrated in a rectangle 101 in Fig. 7, a normal vector n of each face is derived from positions of three vertices of the face, and an average of normal vectors n of surrounding faces is derived as a vertex normal vector. That is, the above-described vertex normal vector derivation unit may derive an average of normal vectors of surrounding faces and use the value as a vertex normal vector of a processing target point.

As illustrated in Fig. 4, orientations of faces obtained by subdividing a face of the base mesh are all the same as an orientation of the face of the base mesh. Orientations of surrounding faces of each of subdivision points located on an edge of a base mesh, like the subdivision points 44-1 to 44-3 in Fig. 4, are the same, and vertex normal vectors are also the same. In the case of the example in Fig. 5, for example, the directions of the vertex normal vectors 52-1 to 52-3 are the same.

That is, by employing the "non-interpolated method", it is possible to obtain vertex normal vectors (that is, local coordinate systems) in directions different from in a case of the "interpolated method". By employing the "non-interpolated method", therefore, at least a decrease in the coding efficiency due to differences between directions of vertex normal vectors caused by employing the "interpolated method" can be suppressed.

Note that a weighted average of normal vectors of surrounding faces may be employed as long as a weighting method does not depend on a position of a subdivision point. That is, the above-described vertex normal vector derivation unit may derive a weighted average of normal vectors of surrounding faces and use the value as a vertex normal vector of a processing target point.

For example, a normal vector of a surrounding face may be weighted in accordance with area of the surrounding face. In this case, for example, as in a virtual program illustrated in a rectangle 102 in Fig. 7, a weight value v is set for each face in accordance with size of the face, and a vertex normal vector is derived by performing weighted averaging on normal vectors n of surrounding faces using the weight values v. In this case, too, since the faces of the base mesh are uniformly (evenly) subdivided, surrounding faces of subdivision points located on an edge of the base mesh, like the subdivision points 44-1 to 44-3 in Fig. 4, have the same size, and vertex normal vectors are in the same direction. That is, the above-described vertex normal vector derivation unit may derive a weighted average using weight values based on area of surrounding faces.

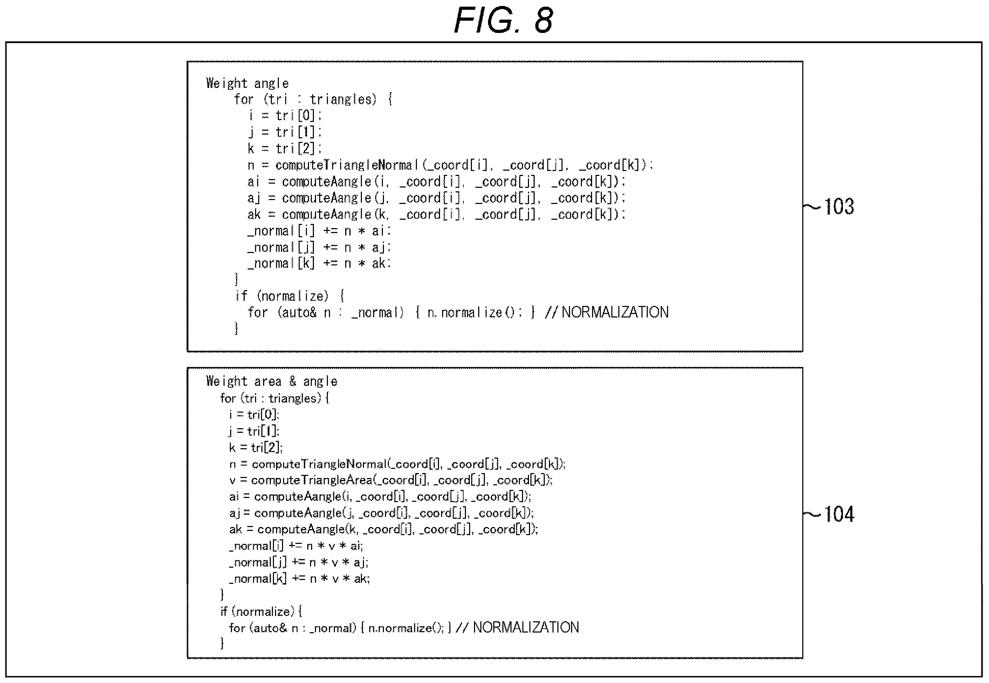

Furthermore, a normal vector may be weighted in accordance with angles (differences in orientation) between surrounding faces. In this case, for example, as in a virtual program illustrated in a rectangle 103 in Fig. 8, weight values ai, aj, ak are set in accordance with angles (differences in orientation) between faces, and a vertex normal vector is derived by performing weighted averaging on normal vectors n of surrounding faces using the weight values. In this case, too, orientations of faces obtained by subdividing a face of a base mesh are all the same as an orientation of the face of the base mesh. Differences in orientation between surrounding faces of individual subdivision points located on an edge of a base mesh, like the division points 44-1 to 44-3 in Fig. 4, therefore, are the same, and vertex normal vectors are in the same direction. That is, the above-described vertex normal vector derivation unit may derive a weighted average using weight values based on differences in orientation between surrounding faces.

Furthermore, a normal vector may be weighted in accordance with both area of surrounding faces and angles (differences in orientation) between the surrounding faces. In this case, for example, as in a virtual program illustrated in a rectangle 104 in Fig. 8, the weight value v is set for each face in accordance with size of the face, the weight values ai, aj, ak are set in accordance with angles (differences in orientation) between faces, and a vertex normal vector is derived by performing weighted averaging on normal vectors n of surrounding faces using these weight values. In this case, too, vertex normal vectors of individual subdivision points located on an edge of a base mesh, like the subdivision points 44-1 to 44-3 in Fig. 4, are in the same direction as in the above-described example. That is, the above-described vertex normal vector derivation unit may derive a weighted average using weight values based on area of surrounding faces and differences in orientation between the surrounding faces.

### <Method 1-2>

Furthermore, as illustrated in a third row from the top of the table in Fig. 6, either the "interpolated method" or the "non-interpolated method" may be selected also in the decoder, and the selected method may be employed for the derivation of vertex normal vectors (Method 1-2). For example, in the first information processing device, the vertex normal vector derivation unit may select a first method (that is, the interpolated method) in which weighting according to a position of a processing target point, which is a processing target vertex of a subdivided base mesh, is performed and a vertex normal vector of the processing target point is derived using normal vectors of surrounding faces of the processing target point or a second method (that is, the non-interpolated method) in which a vertex normal vector of a processing target point is derived using normal vectors of surrounding faces without performing such weighting and derive the vertex normal vector using the selected method. This derivation method will also be referred to as a "decoder selection method" hereinafter.

In this case, the decoder and the encoder are only required to select the "interpolated method" or the "non-interpolated method" by similar methods (by certain predetermined methods). That is, in this case, it is not necessary to explicitly notify the decoder which method the encoder has selected. A resultant increase in the amount of coding, therefore, can be suppressed. Furthermore, since the encoder and the decoder can employ a more suitable one of the "interpolated method" and the "non-interpolated method", a decrease in the coding efficiency can be further suppressed.

This selection method (the method for determining which one of the "interpolated method" and the "non-interpolated method" is selected) may be any method. For example, which of the "interpolated method" and the "non-interpolated method" is to be selected may be determined on the basis of a relationship between orientations (differences in orientation) of faces of the base mesh (that is, directions of normal vectors). For example, the above-described vertex normal vector derivation unit may select the first method or the second method for each face of the base mesh on the basis of differences in orientation between the processing target face and faces surrounding the processing target face (also referred to as surrounding faces).

For example, it is generally considered that in a portion of an object where a surface is flat, an original mesh and a base mesh become also flat, and displacement vectors are likely to be in the same direction (variation in orientation is small). It is therefore considered that if the "interpolated method" is employed and directions of vertex normal vectors (that is, orientations of local coordinates) become different from each other, the coding efficiency tends to decrease. For this reason, when differences in orientation between faces of the base mesh are small, for example, the "non-interpolated method" may be selected. For example, the above-described vertex normal vector derivation unit may perform threshold determination on a difference in orientation between a processing target face and a surrounding face, and if the difference is smaller than a threshold (or smaller than or equal to the threshold), select the "non-interpolated method" and if not, select the "interpolated method".

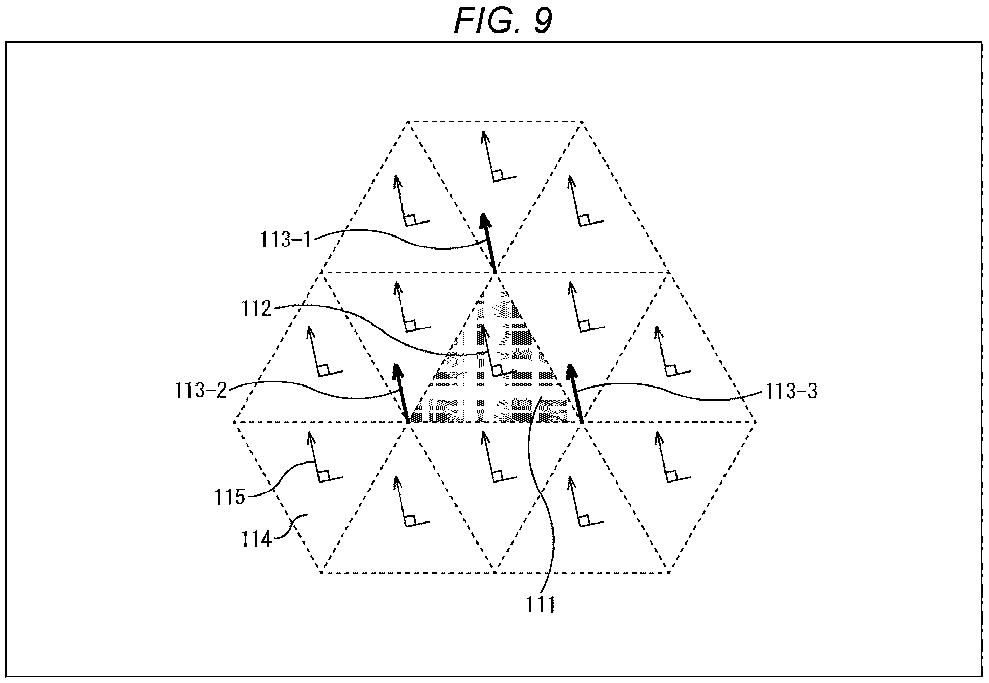

A vertex normal vector of each vertex is derived on the basis of normal vectors of surrounding faces of the vertex. In other words, normal vectors of surrounding faces of a processing target face are indicated by vertex normal vectors of three vertices of the processing target face. For example, in Fig. 9, a processing target face 111 indicated in gray is set as a processing target, and surrounding faces 114 indicated by dotted frames are set as faces surrounding the processing target face 111. A normal vector 112 is a normal vector of the processing target face 111. Normal vectors 115 are normal vectors of the surrounding faces 114. Note that, in Fig. 9, only one surrounding face and a normal vector thereof are given reference numerals, but all faces (triangles) defined by dotted frames are the surrounding faces 114, and normal vectors thereof are the normal vectors 115. In addition, a vertex normal vector 113-1, a vertex normal vector 113-2, and a vertex normal vector 113-3 are vertex normal vectors of individual vertices of the processing target face 111. In this case, the vertex normal vector 113-1 is derived (for example, by averaging or the like) using the normal vectors 115 of the surrounding faces 114 sharing the corresponding vertex. Similarly, the vertex normal vector 113-2 and the vertex normal vector 113-3 are each derived (for example, by averaging or the like) using the normal vectors 115 of the surrounding faces 114 sharing the corresponding vertices. That is, it can be said that the vertex normal vectors 113-1 to 113-3 represent the normal vectors 115 of the surrounding faces 114 illustrated in Fig. 9.

Differences in orientation between a processing target face and surrounding faces may be obtained using a normal vector of the processing target face and vertex normal vectors of three vertices of the processing target face. For example, an inner product of the normal vector of the processing target face described above and the vertex normal vector of each vertex of the processing target face may be obtained, a minimum value of the inner products may be compared with a threshold, and if the minimum value of the inner products is smaller (or if the minimum value of the inner products is equal to the threshold) the first method may be selected, and if not (if the minimum value of the inner products is larger or if the minimum value of the inner product is equal to the threshold), the second method may be selected.

In doing so, it is possible to expect suppression of an increase in the coding efficiency.

Note that this threshold may be determined in advance or may be variable. That is, the encoder and the decoder may have a common threshold in advance, or a threshold employed by the encoder may be transmitted to the decoder (and the decoder may employ the threshold). For example, the above-described vertex normal vector derivation unit may compare the threshold transmitted from the encoder with the minimum value of the inner products. When a threshold is transmitted like this, the decoder need not hold a threshold. In addition, the threshold can be easily made variable.

### <Method 1-3>

In addition, as illustrated in a fourth row from the top of the table in Fig. 6, a vertex normal vector derived by the "interpolated method" and a vertex normal vector derived by the "non-interpolated method" may be combined together (Method 1-3). For example, in the first information processing device, the vertex normal vector derivation unit may perform weighting according to a position of a processing target point, which is a processing target vertex of a subdivided base mesh, derive a vertex normal vector (first vertex normal vector) of the processing target point using normal vectors of surrounding faces of the processing target point or derive a vertex normal vector (second vertex normal vector) of the processing target point using the normal vectors of the surrounding faces without performing weighting, combine the derived first vertex normal vector and second vertex normal vector together, and use a result of the combination (composite vector) as a vertex normal vector of the processing target point. This derivation method will also be referred to as a "combination method" hereinafter.

In doing so, there is a possibility that a vertex normal vector in a direction different from in both a case where the "interpolated method" is employed and a case where the "non-interpolated method" is employed can be obtained. That is, it is possible to set a local coordinate system in an orientation different from those in these cases. Therefore, by employing this "combination method", at least a decrease in the coding efficiency due to differences between directions of vertex normal vectors caused by employing the "interpolated method" and a decrease in the coding efficiency due to alignment of directions of vertex normal vectors caused by employing the "non-interpolated method" can be suppressed.

Note that the first vertex normal vector and the second vertex normal vector may be combined together through weighted averaging. For example, the above-described vertex normal vector derivation unit may combine the derived first vertex normal vector and second vertex normal vector together through weighted averaging. For example, the weight value w may be set, a weighted average of the first vertex normal vector (interpolated vector) and the second vertex normal vector (no interpolated vector) may be derived as in following Expression (1), and the weighted average may be used as a composite vector (updated normal vector). Updated normal vector = w * (no interpolated vector) + (1 - w) * (interpolated vector)

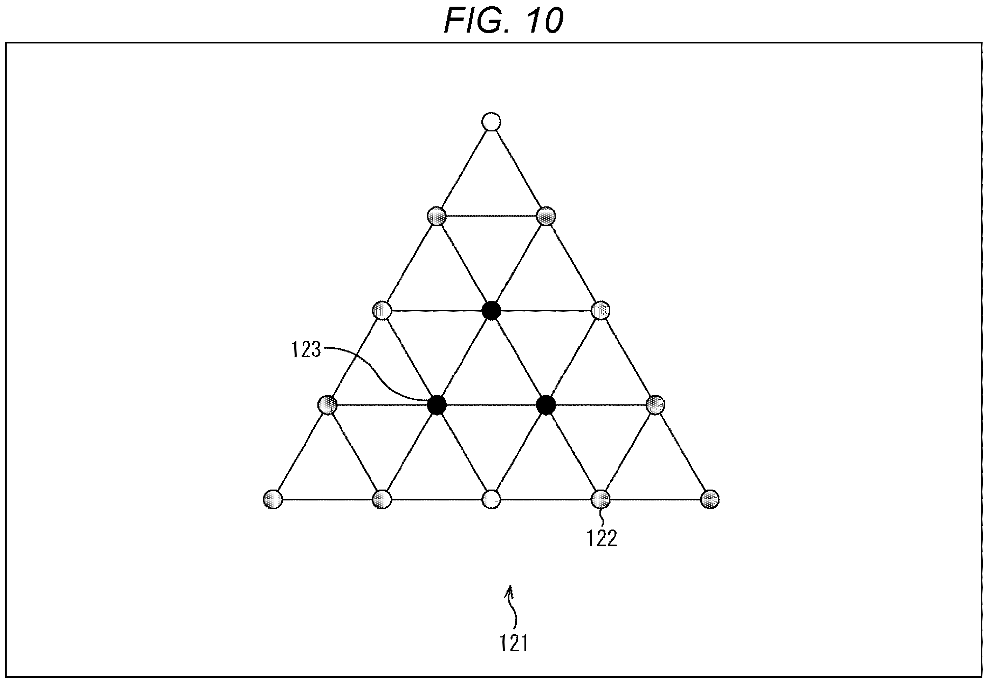

At this time, the weight value may be changed between a vertex located on an edge of a face (hereinafter also referred to as an edge vertex) and a vertex located in a portion other than an edge of a face (hereinafter also referred to as a non-edge vertex). For example, in a face 121 of a base mesh illustrated in Fig. 10, gray vertices 122 are edge vertices, and black vertices 123 are non-edge vertices. For example, the above-described vertex normal vector derivation unit may combine a first vertex normal vector and a second vertex normal vector corresponding to a vertex located on an edge of a face of a base mesh together through weighted averaging using a first weight value, and combine a first vertex normal vector and a second vertex normal vector corresponding to a vertex located in a portion other than an edge through weighted averaging using a second weight value different from the first weight value.

Note that the weight value may be changed for each face, may be changed for each edge, or may be changed for each vertex of the base mesh.

In addition, the weight values may be determined in advance or may be variable. That is, the encoder and the decoder may have common weight values in advance, or the weight values employed by the encoder may be transmitted to the decoder (the decoder may employ the weight values). For example, the above-described vertex normal vector derivation unit may combine the derived first vertex normal vector and second vertex normal vector through weighted averaging using the weight values transmitted from the encoder. When weight values are transmitted like this, the decoder need not hold weight values. In addition, the weight values can be easily made variable.

### <Method 1-4>

Furthermore, as illustrated in a fifth row from the top of the table in Fig. 6, a method designation flag indicating a derivation method employed in the encoder may be transmitted from the encoder to the decoder (Method 1-4). For example, the first information processing device may further include a derivation method setting section that sets a method for deriving vertex normal vectors on the basis of a method designation flag that designates a method for deriving vertex normal vectors, and the vertex normal vector derivation unit may derive vertex normal vectors by the set derivation method. This derivation method will also be referred to as a "flag method".

In doing so, the encoder can select and employ a more suitable method from among a plurality of derivation methods, and it is possible to further suppress a decrease in the coding efficiency. Furthermore, since the decoder can employ a derivation method on the basis of the flag by the method, the decoder can more easily employ the same derivation method as the encoder.

The encoder may employ any selection method. Furthermore, derivation methods used as selection candidates may be any methods, and any number of candidates may be prepared.

For example, the above-described "interpolated method", "non-interpolated method", "decoder selection method", and "combination method" may be used as candidates. That is, the encoder may employ any one of these derivation methods. In the decoder, for example, a first method (interpolated method) in which the above-described derivation method setting section performs weighting according to a position of a processing target point, which is a processing target vertex of a subdivided base mesh, in accordance with a method designation flag and derives a vertex normal vector of the processing target point using normal vectors of surrounding faces of the processing target point, a second method (non-interpolated method) in which the derivation method setting section derives a vertex normal vector of a processing target point using normal vectors of surrounding faces without performing weighting, a third method (decoder selection method) in which the first method or the second method is selected by a predetermined method, or a fourth method (combination method) in which a first vertex normal vector derived by employing the first method and a second vertex normal vector derived by employing the second method are combined together may be selected and set as a method for deriving vertex normal vectors.

Note that the method designation flag may be transmitted in any data units. For example, the method designation flag may be transmitted for each sequence of an original mesh, the method designation flag may be transmitted for each frame, the method designation flag may be transmitted for each base mesh, the method designation flag may be transmitted for each face of a base mesh, or the method designation flag may be transmitted for each vertex of a base mesh. In other words, the method designation flag may designate a method for deriving vertex normal vectors for each sequence of an original mesh, each frame, each base mesh, each face of a base mesh, or each vertex of a base mesh. Furthermore, the above-described derivation method setting section may set a derivation method for each sequence of an original mesh, may set a derivation method for each frame, may set a derivation method for each base mesh, may set a derivation method for each face of a base mesh, or may set a derivation method for each vertex of a base mesh on the basis of the method designation flag.

Note that, in the case of this flag method, the encoder sets a method for deriving vertex normal vectors, derives vertex normal vectors by employing the derivation method, and sets local coordinate systems. The encoder then generates a method designation flag that designates the derivation method and transmits the method designation flag to the decoder.

For example, an information processing device (also referred to as a second information processing device) may include a derivation method setting section that sets a method for deriving vertex normal vectors, which are normal vectors of vertices of a subdivided base mesh, a vertex normal vector derivation unit that derives vertex normal vectors by the set derivation method, a local coordinate derivation unit that derives local coordinates representing displacement vectors in local coordinate systems corresponding to the vertex normal vectors, a displacement video coding unit that codes a displacement video including, as frames, 2D images storing the local coordinates as the displacement vectors, a method designation flag generation unit that generates a method designation flag that designates the set derivation method, and a method designation flag coding unit that codes the method designation flag.

Furthermore, in an information processing method performed by the second information processing device, a method for deriving vertex normal vectors, which are normal vectors of vertices of a subdivided base mesh, may be set, vertex normal vectors may be derived by the set derivation method, local coordinates representing displacement vectors may be derived in local coordinate systems corresponding to the vertex normal vectors, a displacement video including, as frames, 2D images storing the local coordinates as the displacement vectors may be coded, a method designation flag that designates the set derivation method may be generated, and the method designation flag may be coded.

Note that the base mesh is a mesh that is generated by decimating vertices of an original mesh to be coded including the vertices and connections representing a three-dimensional structure of an object and that is coarser than the original mesh. The displacement vectors are differences in position between the vertices of the subdivided base mesh and the vertices of the original mesh. The local coordinate systems are coordinate systems for the individual vertices of the subdivided base mesh set on the basis of the vertex normal vectors. The local coordinates are coordinates representing the displacement vectors of the vertices of the subdivided base mesh in the local coordinate systems corresponding to the vertex normal vectors of the vertices.

Furthermore, in the second information processing device, a first method (interpolated method) in which the derivation method setting section performs weighting according to a position of a processing target point, which is a processing target vertex of a subdivided base mesh, and derives a vertex normal vector of the processing target point using normal vectors of surrounding faces of the processing target point, a second method (non-interpolated method) in which the derivation method setting section derives a vertex normal vector of a processing target point using normal vectors of surrounding faces without performing weighting, a third method (decoder selection method) in which the decoder is caused to select which of the first method and the second method is to be employed, or a fourth method (combination method) in which a first vertex normal vector derived by employing the first method and a second vertex normal vector derived by employing the second method are combined together and a result of the combination (composite vector) is used as the vertex normal vector of the processing target point may be selected and set as a method for deriving vertex normal vectors.

Note that when the third method (decoder selection method) is selected, the above-described vertex normal vector derivation unit may select the first method or the second method by the same method as that employed by the decoder, and derive the vertex normal vector by employing the selected method. For example, the vertex normal vector derivation unit may select the first method or the second method for each face of the base mesh on the basis of differences in orientation between the processing target face and the surrounding faces. For example, the vertex normal vector derivation unit may obtain an inner product of the normal vector of the processing target face and the vertex normal vector of each vertex of the processing target face, compare a minimum value of the inner products with a threshold, and if the minimum value of the inner products is smaller (or if the minimum value of the inner products is equal to the threshold) select the first method, and if not (if the minimum value of the inner products is larger or if the minimum value of the inner product is equal to the threshold), select the second method. Note that the threshold may be transmitted to the decoder. For example, in the second information processing device, the method designation flag coding unit may further code the threshold.

Furthermore, if the fourth method (combination method) is selected, the above-described vertex normal vector derivation unit may derive the first vertex normal vector by employing the first method, derive the second vertex normal vector by employing the second method, and combine the derived first vertex normal vector and second vertex normal vector together through weighted averaging. For example, the vertex normal vector derivation unit may combine a first vertex normal vector and a second vertex normal vector corresponding to a vertex located on an edge of a face of the base mesh through weighted averaging using the first weight value. The vertex normal vector derivation unit may then combine a first vertex normal vector and a second vertex normal vector corresponding to a vertex located in a portion other than an edge through weighted averaging using the second weight value different from the first weight value. Note that the threshold may be transmitted to the decoder. For example, in the second information processing device, the above-described method designation flag coding unit may further code the weight values used for the weighted averaging.

As described above, the method designation flag may be transmitted in any data units. For example, the method designation flag may be transmitted for each sequence of an original mesh, the method designation flag may be transmitted for each frame, the method designation flag may be transmitted for each base mesh, the method designation flag may be transmitted for each face of a base mesh, or the method designation flag may be transmitted for each vertex of a base mesh. In other words, in the second information processing device, the derivation method setting section may set a method for deriving vertex normal vectors for each sequence of an original mesh, for each frame, for each base mesh, for each face of a base mesh, or for each vertex of a base mesh. Furthermore, in other words, in the second information processing device, the method designation flag generation unit may generate a method designation flag for each sequence of an original mesh, for each frame, for each base mesh, for each face of a base mesh, or for each vertex of a base mesh.

### <Method 1-5>

Furthermore, as illustrated in a sixth row from the top of the table in Fig. 6, in the encoder, derived vertex normal vectors may be clustered using vertex normal vector candidates prepared in advance (Method 1-5). For example, the first information processing device may further include a clustering unit that clusters derived vertex normal vectors with predetermined normal vector candidates prepared in advance. Furthermore, the second information processing device may further include a clustering unit that clusters derived vertex normal vectors with predetermined normal vector candidates prepared in advance.

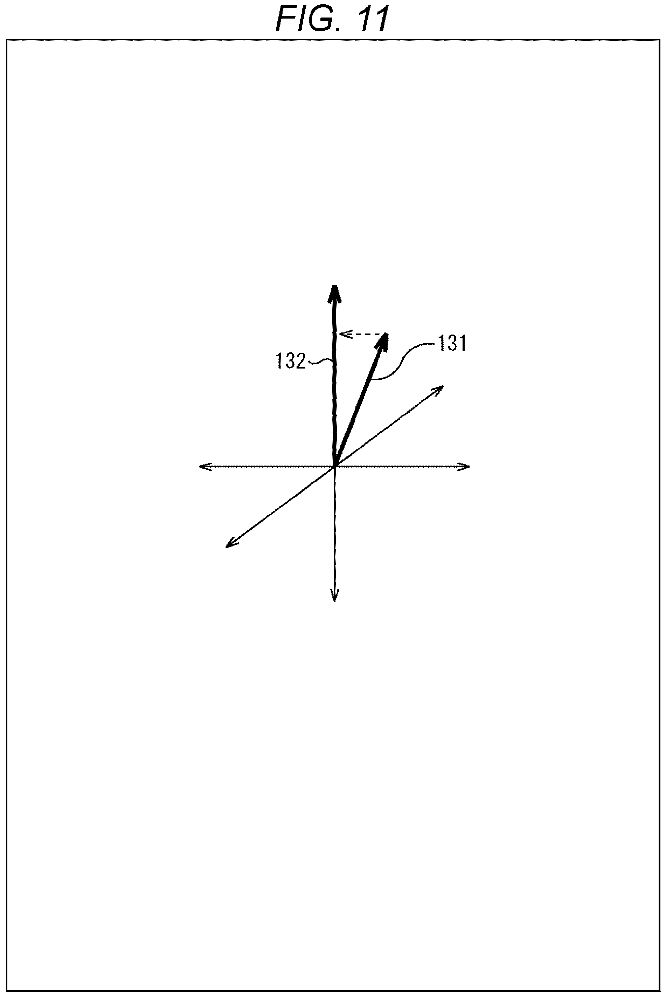

As illustrated in Fig. 11, for example, when six directions along individual coordinate axes of a Cartesian coordinate system are set as vertex normal vector candidates and a vertex normal vector 131 is derived by some derivation method, the clustering unit replaces the vertex normal vector 131 with a candidate (vertex normal vector 132) having the closest orientation. A local coordinate system is then set using the vertex normal vector 132 after the replacement.

By clustering vertex normal vectors like this, directions of the vertex normal vectors are limited to directions of candidates prepared in advance. That is, it is possible to suppress an increase in variation in the direction of each vertex normal vector. In other words, through such clustering, orientations of local coordinate systems are corrected and limited to orientations of candidates prepared in advance. That is, it is possible to suppress an increase in variation in the orientation of each local coordinate system.

Method 1-5 can be employed in combination with any of Methods 1-1 to 1-4 described above. That is, in any of the above-described Methods 1-1 to 1-4, derived vertex normal vectors may be clustered.

Note that the example in Fig. 11 is an example, and any number of candidates may be used. Furthermore, directions of candidate vectors may be any directions, and are not limited to the example in Fig. 11.

### <Method 1-6>

Furthermore, as illustrated in a bottom row of the table in Fig. 6, (orientations of) derived vertex normal vectors may be quantized in the encoder (Method 1-6). For example, the first information processing device may further include a quantization unit that quantizes derived vertex normal vectors. Furthermore, the second information processing device may further include a quantization unit that quantizes derived vertex normal vectors.

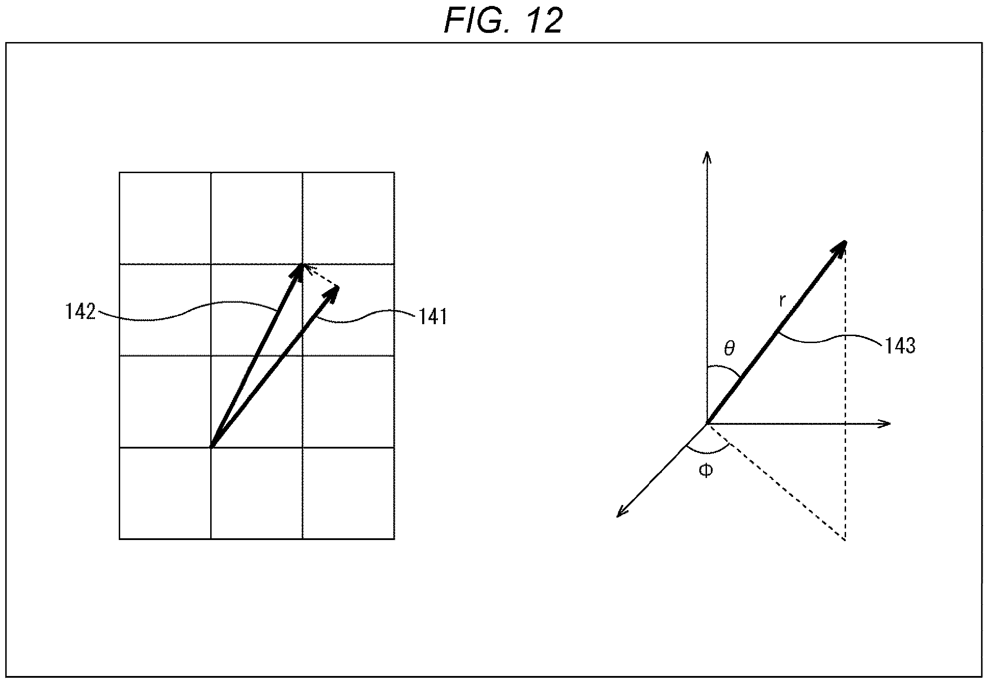

For example, as illustrated on a left side of Fig. 12, when a vertex normal vector 141 is derived by some derivation method, the quantization unit moves a vertex normal vector 131 onto a predetermined grid (quantizes coordinates). A local coordinate system is then set using a vertex normal vector 142 obtained as a result of the quantization.

By quantizing vertex normal vectors like this, directions of vertex normal vectors are limited. That is, it is possible to suppress an increase in variation in the direction of each vertex normal vector. In other words, through such quantization, orientations of local coordinate systems are corrected and limited to orientations prepared in advance. That is, it is possible to suppress an increase in variation in the orientation of each local coordinate system.

Note that any quantization method may be used as long as directions of vertex normal vectors (that is, local coordinates) can be corrected. For example, as illustrated on a right side of Fig. 12, (directions of) vertex normal vectors may be quantized using a spherical coordinate system. For example, in the case of this spherical coordinate system, θ, φ, r, and the like may be quantized. Of course, a quantization method is not limited to the example in Fig. 12.

Method 1-6 can be employed in combination with any of Methods 1-1 to 1-4 described above. That is, in any of the above-described methods 1-1 to 1-4, derived vertex normal vectors may be quantized. Of course, Method 1-5 and Method 1-6 may be employed in combination. That is, both quantization and clustering may be performed on vertex normal vectors.

Note that the above-described methods (Methods 1-1 to 1-6) can be used in combination with other methods. For example, a method to be employed may be switched in the middle of a sequence. For example, it is also possible to employ Method 1-1 in a certain frame, to employ Method 1-2 in another frame, and to employ Method 1-3 in yet another frame.

### <4. Embodiment>

### <Coding Device>

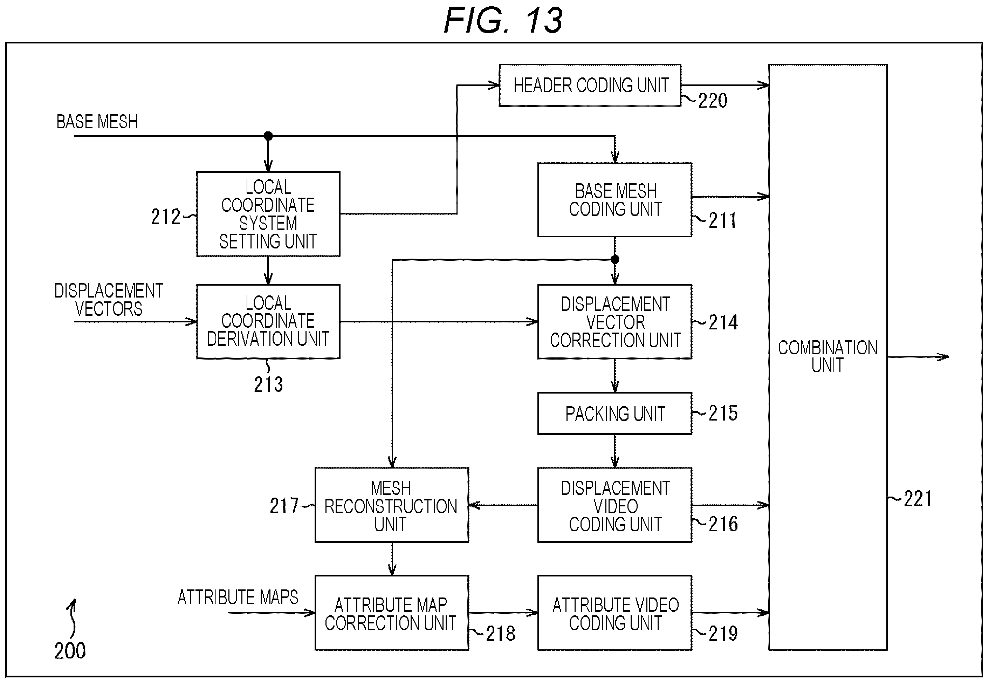

The present technology can be applied to a coding device that codes meshes. Fig. 13 is a block diagram illustrating an example of configuration of a coding device that is an aspect of the information processing device to which the present technology is applied. A coding device 200 illustrated in Fig. 13 is a device that codes meshes. The coding device 200 codes meshes by a method basically similar to V-DMC described in Non-Patent Document 1.

The coding device 200, however, codes meshes by employing Method 1 described above in <3. Local Coordinate Systems for Coding>. Furthermore, the coding device 200 may employ one or more of Methods 1-1 to 1-3 described above.

Note that Fig. 13 illustrates main processing units, main data flows, and the like, and processing units, data flows, and the like are not limited to those illustrated in Fig. 13. That is, in the coding device 200, there may be processing units not illustrated in Fig. 13 as blocks and there may be processing units and data flows not illustrated in Fig. 13 as arrows or the like.

As illustrated in Fig. 13, the coding device 200 includes a base mesh coding unit 211, a local coordinate system setting unit 212, a local coordinate derivation unit 213, a displacement vector correction unit 214, a packing unit 215, a displacement video coding unit 216, a mesh reconstruction unit 217, an attribute map correction unit 218, an attribute video coding unit 219, a header coding unit 220, and a combination unit 221.

A base mesh, displacement vectors, and an attribute map are supplied to the coding device 200 for each frame. This data may be generated from an original mesh, for example, in preprocessing.

The base mesh coding unit 211 codes the base mesh and supplies the coded data to the combination unit 221. This coding method may be any method. For example, the base mesh of each frame may be coded independently (intra coding). Furthermore, a base mesh of a target frame may be coded as a difference (motion vector) from a base mesh of a reference frame (inter coding).

Furthermore, the base mesh coding unit 211 may decode generated coded data to generate (restore) a base mesh. The generated (restored) base mesh includes coding distortion. The base mesh coding unit 211 supplies the base mesh to the displacement vector correction unit 214 and the mesh reconstruction unit 217.

The local coordinate system setting unit 212 obtains the base mesh and sets a local coordinate system for each vertex of a subdivided base mesh. The local coordinate system setting unit 212 sets the local coordinate systems by employing Method 1 described above. Note that the local coordinate system setting unit 212 may set the local coordinate systems by employing one or more of the above-described Methods 1-1 to 1-3. The local coordinate system setting unit 212 supplies the set local coordinate systems to the local coordinate derivation unit 213. Note that the local coordinate system setting unit 212 may employ Method 1-2 and supply a threshold used in the decoder selection method to the header coding unit 220. Alternatively, the local coordinate system setting unit 212 may employ Method 1-3 and supply weight values used in the combination method to the header coding unit 220.

The local coordinate derivation unit 213 obtains the displacement vectors and the local coordinate systems supplied from the local coordinate system setting unit 212, and derives local coordinates representing the displacement vectors in the local coordinate systems. The local coordinate derivation unit 213 derives the local coordinates by employing Method 1 described above. The local coordinate derivation unit 213 supplies the derived local coordinates to the displacement vector correction unit 214 as displacement vectors.

The displacement vector correction unit 214 obtains the base mesh including the coding distortion supplied from the base mesh coding unit 211. The displacement vector correction unit 214 also obtains the local coordinates (displacement vectors) supplied from the local coordinate derivation unit 213. The displacement vector correction unit 214 subdivides the base mesh including the coding distortion, and corrects the local coordinates (displacement vectors) using the subdivided base mesh. The displacement vector correction unit 214 supplies the corrected local coordinates (displacement vectors) to the packing unit 215. Note that this correction may be omitted.

The packing unit 215 obtains the local coordinates (displacement vectors) supplied from the displacement vector correction unit 214. The packing unit 215 packs the local coordinates (displacement vectors) into a two-dimensional image (also referred to as a frame image) of a current frame. At this time, the packing unit 215 may perform a coefficient transform (for example, a wavelet transform) on the local coordinates (displacement vectors) and pack transform coefficients in a two-dimensional image. Furthermore, the packing unit 215 may quantize the local coordinates (or the transform coefficients) and pack the quantized coefficients in a two-dimensional image. The packing unit 215 supplies the two-dimensional image in which the local coordinates (or information corresponding thereto) are packed as the displacement vector to the displacement video coding unit 216.

The displacement video coding unit 216 obtains the two-dimensional image supplied from the packing unit 215. The displacement video coding unit 216 sets the two-dimensional image as a frame image and codes the frame image as a moving image (displacement video). The displacement video coding unit 216 codes the displacement video by employing Method 1 described above. The displacement video coding unit 216 supplies coded data regarding the generated displacement video to the mesh reconstruction unit 217 and the combination unit 221.

The mesh reconstruction unit 217 decodes the coded data regarding the displacement video supplied from the displacement video coding unit 216, and derives local coordinates (displacement vectors) by, for example, unpacking the two-dimensional image. Furthermore, the mesh reconstruction unit 217 subdivides the base mesh (including the coding distortion) supplied from the base mesh coding unit 211, and reconstructs the mesh by applying the derived displacement vectors. The mesh includes coding distortion. The mesh reconstruction unit 217 supplies the reconstructed mesh to the attribute map correction unit 218.

The attribute map correction unit 218 obtains an attribute map such as texture and corrects the attribute map using the mesh (including the coding distortion) supplied from the mesh reconstruction unit 217. The attribute map correction unit 218 supplies the corrected attribute map to the attribute video coding unit 219. Note that this correction may be omitted.

The attribute video coding unit 219 sets the attribute map supplied from the attribute map correction unit 218 as a frame image and codes the frame image as a moving image (attribute video). The attribute video coding unit 219 supplies coded data regarding the generated attribute video to the combination unit 221.

The header coding unit 220 employs Method 1 described above, and codes information stored in a header. For example, the header coding unit 220 may employ Method 1-2 described above and code a threshold used in the decoder selection method. Alternatively, the header coding unit 220 may employ Method 1-3 described above and code weight values used in the combination method. That is, the threshold and the weight values may be stored in the header and transmitted. The header coding unit 220 supplies coded data regarding the generated header to the combination unit 221.

The combination unit 221 combines (multiplexes) the coded data regarding the header, the coded data regarding the base mesh, the coded data regarding the displacement video, and the coded data regarding the attribute video supplied thereto to generate a bitstream. The combination unit 221 outputs the generated bitstream to the outside of the coding device 200. This bitstream is transmitted to a decoding device via any transmission medium or any storage medium.

### <Local Coordinate System Setting Unit>

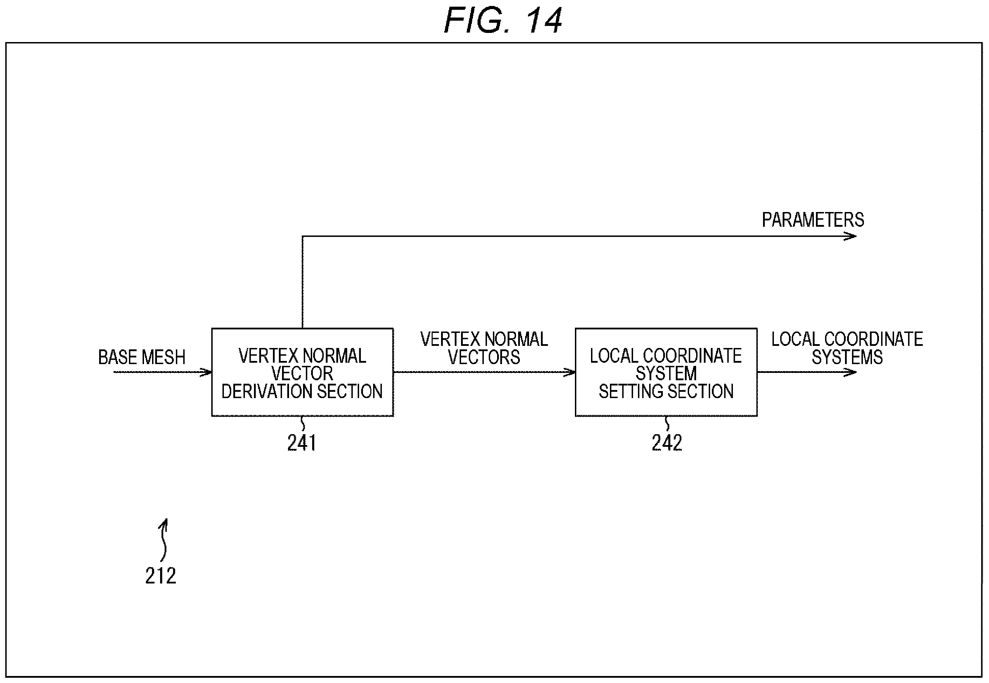

Fig. 14 is a block diagram illustrating a main configuration example of the local coordinate system setting unit 212. As illustrated in Fig. 14, the local coordinate system setting unit 212 includes a vertex normal vector derivation section 241 and a local coordinate system setting section 242.

The vertex normal vector derivation section 241 employs Method 1 described above, subdivides the supplied base mesh, and derives vertex normal vectors of vertices of the subdivided base mesh. Note that the vertex normal vector derivation section 241 may derive vertex normal vectors by employing one or more of the above-described Methods 1-1 to 1-3. For example, the vertex normal vector derivation section 241 may employ Method 1-1 and derive vertex normal vectors by the non-interpolated method.

Furthermore, the vertex normal vector derivation section 241 may employ Method 1-2 and derive vertex normal vectors by the decoder selection method. In this case, the vertex normal vector derivation section 241 may supply a threshold used in the decoder selection method to the header coding unit 220 as a parameter. Furthermore, the vertex normal vector derivation section 241 may employ Method 1-3 and derive vertex normal vectors by the combination method. In this case, the vertex normal vector derivation section 241 may supply weight values used in the combination method to the header coding unit 220 as a parameter. The vertex normal vector derivation section 241 supplies the derived vertex normal vectors to the local coordinate system setting section 242.

The local coordinate system setting section 242 employs Method 1 described above, and sets local coordinate systems based on the vertex normal vectors supplied from the vertex normal vector derivation section 241. For example, the local coordinate system setting section 242 sets each vertex normal vector as a coordinate axis and sets two other coordinate axes (bi-tangent, tangent and bi-tangent) perpendicular to the vertex normal vector to set a local coordinate system that is a Cartesian coordinate system. The local coordinate system setting section 242 sets a local coordinate system for each vertex normal vector. The local coordinate system setting section 242 supplies the set local coordinate systems to the local coordinate derivation unit 213.

With such a configuration, the coding device 200 can suppress a decrease in the coding efficiency.

### <Flow of Coding Process>

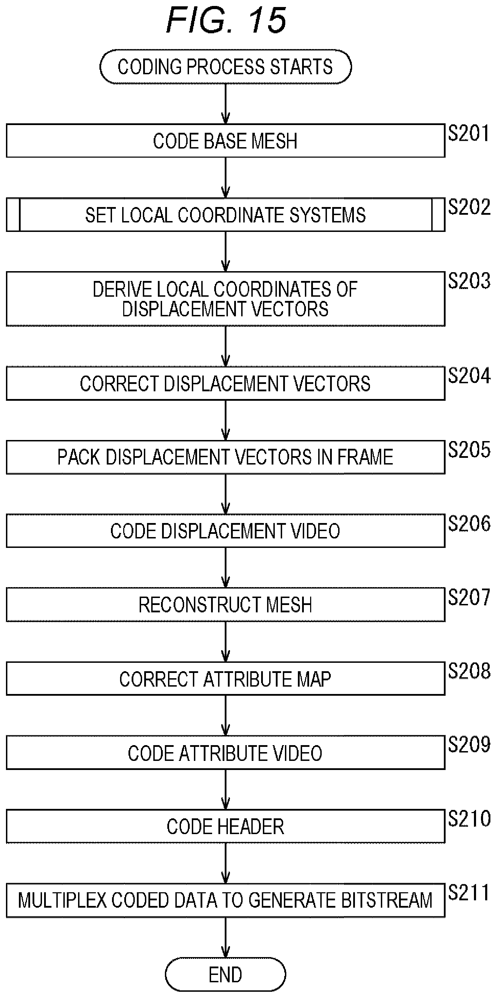

An example of a flow of a coding process performed by the coding device 200 will be described with reference to a flowchart of Fig. 15.

When the coding process is started, the base mesh coding unit 211 codes a base mesh in step S201. Furthermore, the base mesh coding unit 211 decodes generated coded data to generate (restore) a base mesh including coding distortion.

In step S202, the local coordinate system setting unit 212 employs Method 1 described above, performs a process for setting local coordinate systems, and sets local coordinate systems. Note that the local coordinate system setting unit 212 may perform the process by employing one or more of the above-described Methods 1-1 to 1-3.

In step S203, the local coordinate derivation unit 213 employs Method 1 described above and derives local coordinates representing displacement vectors in the local coordinate systems set in step S202.

In step S204, the displacement vector correction unit 214 corrects the local coordinates (displacement vectors) derived in step S203 using the base mesh (including the coding distortion) generated in step S201.

In step S205, the packing unit 215 packs the local coordinates (displacement vectors) (if corrected in step S204, corrected local coordinates) in a frame (two-dimensional image).

In step S206, the displacement video coding unit 216 employs Method 1 described above, sets, as a frame image, the two-dimensional image in which the local coordinates are packed, and codes the frame image as a displacement video.

In step S207, the mesh reconstruction unit 217 reconstructs a mesh (including coding distortion) using the base mesh (including the coding distortion) generated in step S201 and the coded data regarding the displacement video generated in step S206.

In step S208, the attribute map correction unit 218 corrects an attribute map using the reconstructed mesh.

In step S209, the attribute video coding unit 219 sets the corrected attribute map as a frame image and codes the frame image as an attribute video.

In step S210, the header coding unit 220 codes information stored in a header. For example, the header coding unit 220 may employ Method 1-2 described above and code a threshold used in the decoder selection method. Alternatively, the header coding unit 220 may employ Method 1-3 described above and code weight values used in the combination method.

In step S211, the combination unit 221 multiplexes the coded data regarding the base mesh generated in step S201, the coded data regarding the displacement video generated in step S206, the coded data regarding the attribute video generated in step S209, and the coded data regarding the header generated in step S210 to generate a bitstream.

When the processing in step S211 ends, the coding process ends.

### <Flow 1 of Process for Setting Local Coordinate Systems in Coding Process>

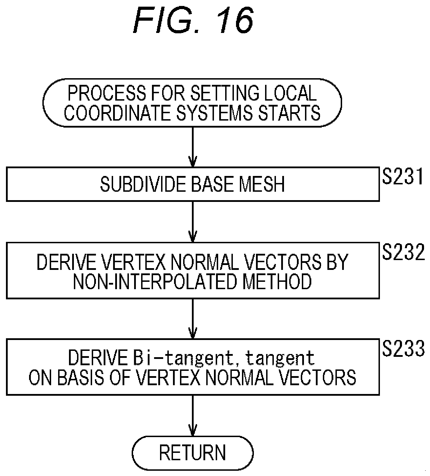

Next, the process for setting local coordinate systems performed in step S202 of Fig. 15 will be described. First, an example of a flow of the process for setting local coordinate systems when Method 1-1 is employed, that is, when vertex normal vectors are derived by the non-interpolated method, will be described with reference to a flowchart of Fig. 16.

When the process for setting local coordinate systems is started, the vertex normal vector derivation section 241 subdivides, in step S231, the base mesh to generate subdivision points.

In step S232, the vertex normal vector derivation section 241 derives a vertex normal vector for each of vertices of the subdivided base mesh by the "non-interpolated method" described above in <3. Local Coordinate Systems for Coding>.

In step S233, the local coordinate system setting section 242 sets each vertex normal vector derived in step S232 as a coordinate axis and sets two other coordinate axes (bi-tangent, tangent and bi-tangent) perpendicular to the vertex normal vector to set a local coordinate system that is a Cartesian coordinate system.

When the processing in step S233 ends, the process for setting local coordinate systems ends, and the process returns to Fig. 15.

### <Flow 2 of Process for Setting Local Coordinate Systems in Coding Process>

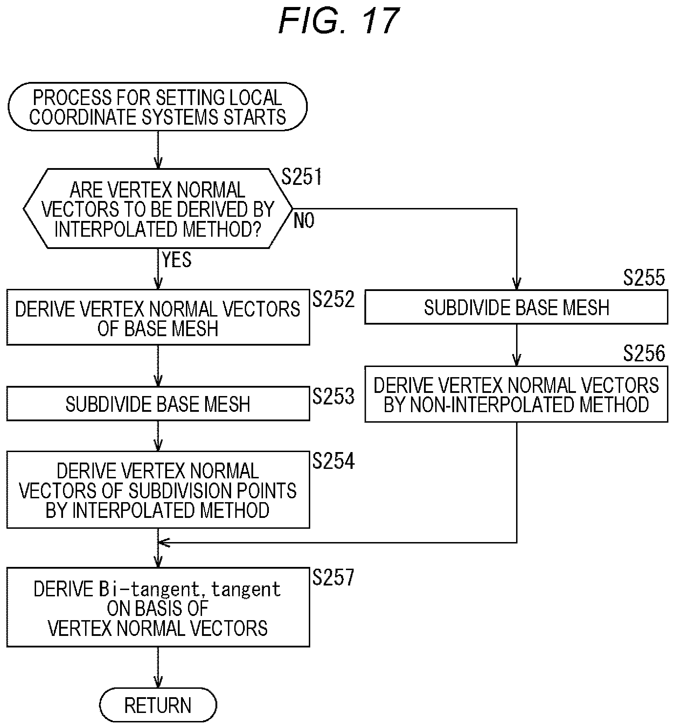

Next, an example of a flow of the process for setting local coordinate systems when Method 1-2 is employed, that is, when vertex normal vectors are derived by the decoder selection method, will be described with reference to a flowchart of Fig. 17.

When the process for setting local coordinate systems is started, the vertex normal vector derivation section 241 determines (selects), in step S251, whether or not to derive vertex normal vectors by the "interpolated method".

This selection method may be any method. For example, which of the "interpolated method" and the "non-interpolated method" is to be selected may be determined on the basis of a relationship between orientations (differences in orientation) of faces of the base mesh (that is, directions of normal vectors). For example, the vertex normal vector derivation section 241 may perform threshold determination on a difference in orientation between a processing target face and a surrounding face, and if the difference is smaller than a threshold (or smaller than or equal to the threshold), select the "non-interpolated method" and if not, select the "interpolated method". For example, the vertex normal vector derivation section 241 may obtain an inner product of the normal vector of the processing target face and the vertex normal vector of each vertex of the processing target face, compare a minimum value of the inner products with a threshold, and if the minimum value of the inner products is smaller (or if the minimum value of the inner products is equal to the threshold) select the first method, and if not (if the minimum value of the inner products is larger or if the minimum value of the inner product is equal to the threshold), select the second method.

Note that this threshold may be determined in advance or may be variable. That is, the encoder and the decoder may have a common threshold in advance, or a threshold employed by the encoder may be transmitted to the decoder (and the decoder may employ the threshold).

If it is determined that the vertex normal vectors are to be derived by the "interpolated method", the process proceeds to step S252.

In step S252, the vertex normal vector derivation section 241 derives vertex normal vectors of the base mesh.

In step S253, the vertex normal vector derivation section 241 subdivides the base mesh.

In step S254, the vertex normal vector derivation section 241 derives the vertex normal vectors of the subdivision points by the "interpolated method". When the processing in step S254 ends, the process proceeds to step S257.

If it is determined in step S251 that the vertex normal vectors are to be derived by the "non-interpolated method", on the other hand, the process proceeds to step S255.

In step S255, the vertex normal vector derivation section 241 subdivides the base mesh.

In step S256, the vertex normal vector derivation section 241 derives a vertex normal vector for each of vertices of the subdivided base mesh by the "non-interpolated method" described above in <3. Local Coordinate Systems for Coding>. When the processing in step S256 ends, the process proceeds to step S257.

In step S257, the local coordinate system setting section 242 sets each vertex normal vector derived as described above as a coordinate axis and sets two other coordinate axes (bi-tangent, tangent and bi-tangent) perpendicular to the vertex normal vector to set a local coordinate system that is a Cartesian coordinate system.

When the processing in step S257 ends, the process for setting local coordinate systems ends, and the process returns to Fig. 15.

### <Flow 3 of Process for Setting Local Coordinate Systems in Coding Process>

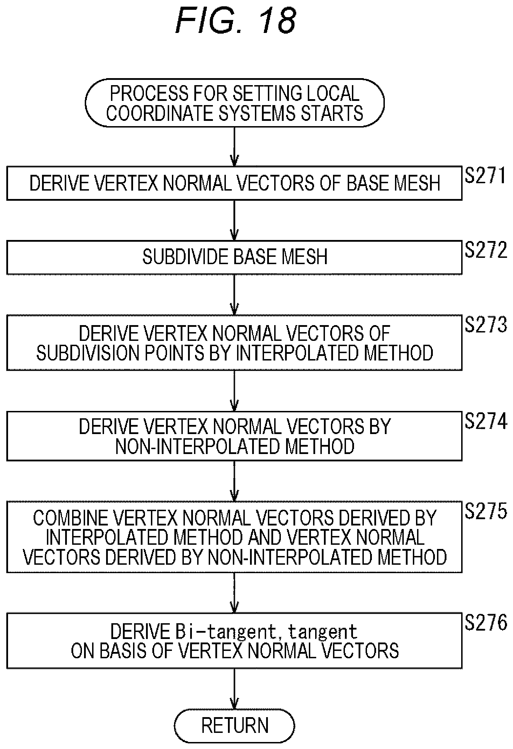

Next, an example of a flow of the process for setting local coordinate systems when Method 1-3 is employed, that is, when vertex normal vectors are derived by the combination method, will be described with reference to a flowchart of Fig. 18.

When the process for setting local coordinate systems is started, the vertex normal vector derivation section 241 derives vertex normal vectors of the base mesh in step S271.

In step S272, the vertex normal vector derivation section 241 subdivides the base mesh.

In step S273, the vertex normal vector derivation section 241 derives the vertex normal vectors of the subdivision points by the "interpolated method". That is, the vertex normal vector of each of vertices of the subdivided base mesh is derived by the "interpolated method" through the processing in steps S271 to S273.

In step S274, the vertex normal vector derivation section 241 derives a vertex normal vector for each of vertices of the base mesh subdivided in step S272 by the "non-interpolated method" described above in <3. Local Coordinate Systems for Coding>.

In step S275, the vertex normal vector derivation section 241 combines the vertex normal vectors derived by the "interpolated method" and the vertex normal vectors derived by the "non-interpolated method" together to derive composite vectors. At this time, the vertex normal vector derivation section 241 may combine the vertex normal vectors derived by the "interpolated method" and the vertex normal vectors derived by the "non-interpolated method" through weighted averaging. A weight value applied to the weighted averaging may be different between an edge vertex and a non-edge vertex. Furthermore, the weight value may be changed for each face, may be changed for each edge, or may be changed for each vertex of the base mesh. In addition, the weight values may be determined in advance or may be variable. That is, the encoder and the decoder may have common weight values in advance, or the weight values employed by the encoder may be transmitted to the decoder (the decoder may employ the weight values).

In step S276, the local coordinate system setting section 242 sets each vertex normal vector (composite vector) derived as described above as a coordinate axis and sets two other coordinate axes (bi-tangent, tangent and bi-tangent) perpendicular to the vertex normal vector to set a local coordinate system that is a Cartesian coordinate system.

When the processing in step S276 ends, the process for setting local coordinate systems ends, and the process returns to Fig. 15.

By performing each process as described above, the coding device 200 can suppress a decrease in the coding efficiency.

### <Decoding Device>

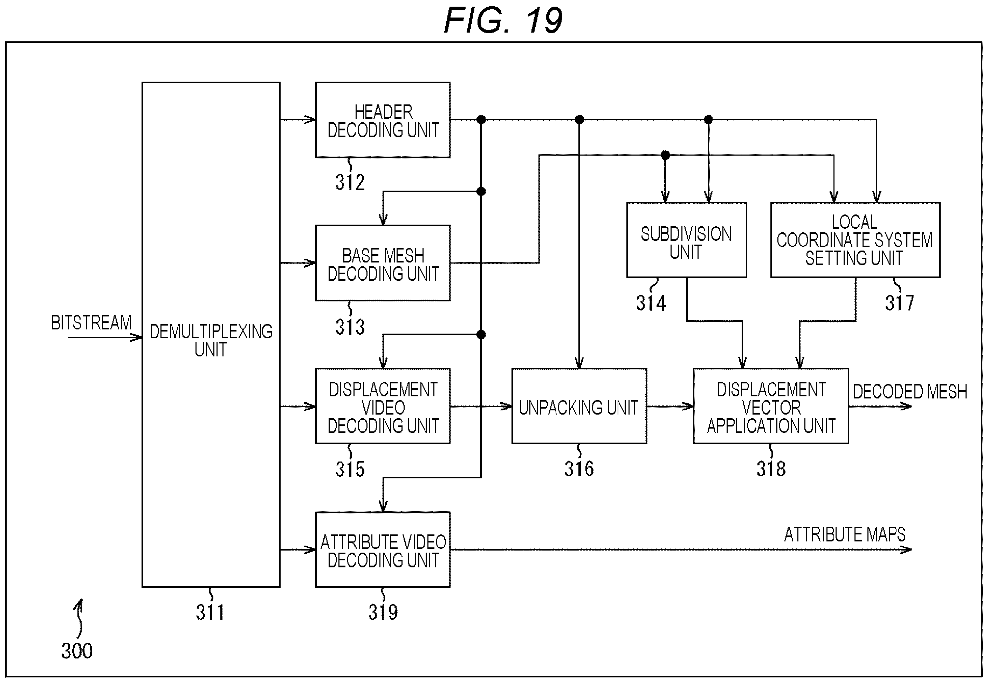

The present technology can be applied to a decoding device that decodes coded data regarding meshes. Fig. 19 is a block diagram illustrating an example of configuration of a decoding apparatus that is an aspect of the information processing device to which the present technology is applied. A decoding device 300 illustrated in Fig. 19 is a device that decodes coded data regarding meshes. The decoding device 300 decodes coded data regarding meshes by a method basically similar to V-DMC described in Non-Patent Document 1.

The decoding device 300, however, decodes coded data regarding meshes by employing Method 1 described above in <3. Local Coordinate Systems for Coding>. Furthermore, the decoding device 300 may employ one or more of Methods 1-1 to 1-3 described above.

That is, the decoding device 300 is a decoding device corresponding to the coding device 200 in Fig. 13, and can decode a bitstream generated by the coding device 200 to reconstruct a mesh.

Note that Fig. 19 illustrates main processing units, main data flows, and the like, and processing units, data flows, and the like are not limited to those illustrated in Fig. 19. That is, in the decoding device 300, there may be processing units not illustrated in Fig. 19 as blocks, and there may be processing units and data flows not illustrated in Fig. 19 as arrows or the like.

As illustrated in Fig. 19, the decoding device 300 includes a demultiplexing unit 311, a header decoding unit 312, a base mesh decoding unit 313, a subdivision unit 314, a displacement video decoding unit 315, an unpacking unit 316, a local coordinate system setting unit 317, a displacement vector application unit 318, and an attribute video decoding unit 319.

A bitstream generated by a coding device (for example, the coding device 200) that codes meshes by the V-DMC method is supplied to the decoding device 300.

The demultiplexing unit 311 demultiplexes the bitstream and generates individual coded data included in the bitstream. For example, the demultiplexing unit 311 extracts coded data regarding a header from the bitstream and supplies the coded data to the header decoding unit 312. Furthermore, the demultiplexing unit 311 extracts coded data regarding a base mesh from the bitstream and supplies the coded data regarding the base mesh to the base mesh decoding unit 313. Furthermore, the demultiplexing unit 311 extracts coded data regarding a displacement video from the bitstream and supplies the coded data to the displacement video decoding unit 315. Furthermore, the demultiplexing unit 311 extracts coded data regarding an attribute video from the bitstream and supplies the coded data to the attribute video decoding unit 319.

The header decoding unit 312 employs Method 1 described above, decodes the coded data regarding the header supplied from the demultiplexing unit 311, and generates (restores) information stored in the header. The header decoding unit 312 appropriately supplies the generated information to the base mesh decoding unit 313, the subdivision unit 314, the displacement video decoding unit 315, the unpacking unit 316, the local coordinate system setting unit 317, and the attribute video decoding unit 319. For example, the header decoding unit 312 may employ Method 1-2 described above and supply a threshold (a threshold used in the encoder) generated by decoding the coded data to the local coordinate system setting unit 317. Furthermore, the header decoding unit 312 may employ Method 1-3 described above and supply weight values (weight values used in the encoder) generated by decoding the coded data to the local coordinate system setting unit 317.

The base mesh decoding unit 313 decodes the coded data regarding the base mesh supplied from the demultiplexing unit 311, and generates (restores) the base mesh. Note that the coded data regarding the base mesh may be intra-coded or inter-coded. That is, the base mesh decoding unit 313 can intra-decode or inter-decode the coded data. The base mesh decoding unit 313 employs Method 1 described above to decode the coded data. The base mesh decoding unit 313 supplies the generated base mesh to the subdivision unit 314 and the local coordinate system setting unit 317.

The subdivision unit 314 subdivides the base mesh supplied from the base mesh decoding unit 313, and supplies the subdivided base mesh to the displacement vector application unit 318.

The displacement video decoding unit 315 decodes the coded data regarding the displacement video supplied from the demultiplexing unit 311 to generate (restore) the displacement video. The displacement video decoding unit 315 decodes the coded data by employing Method 1 described above. The displacement video decoding unit 315 supplies (a current frame of) the generated displacement video to the unpacking unit 316.

The unpacking unit 316 unpacks local coordinates (displacement vectors) from the current frame of the displacement video supplied from the displacement video decoding unit 315. At this time, the unpacking unit 316 may unpack transform coefficients and perform a coefficient transform (for example, a wavelet transform) on the transform coefficients to derive local coordinates (displacement vectors). Alternatively, the unpacking unit 316 may unpack quantized coefficients and inversely quantize the quantized coefficient to derive local coordinates (displacement vectors). Alternatively, the unpacking unit 316 may unpack the quantized coefficients, inversely quantize the quantization coefficients to derive transform coefficients, and perform a coefficient transform (for example, a wavelet transform) on the transform coefficients to derive local coordinates (displacement vectors). The unpacking unit 316 supplies the unpacked local coordinates (displacement vectors) to the displacement vector application unit 318.

The local coordinate system setting unit 317 obtains the base mesh supplied from the base mesh decoding unit 313, and sets a local coordinate system for each of vertices of the subdivided base mesh. The local coordinate system setting unit 317 sets the local coordinate systems by employing Method 1 described above. Note that the local coordinate system setting unit 317 may set the local coordinate systems by employing one or more of the above-described Methods 1-1 to 1-3. Note that the local coordinate system setting unit 317 sets the local coordinate systems by the same method as that employed by the encoder (for example, the local coordinate system setting unit 212 of the coding device 200). The local coordinate system setting unit 317 supplies the set local coordinate systems to the displacement vector application unit 318. Note that the local coordinate system setting unit 317 may employ Method 1-2, derive vertex normal vectors by the decoder selection method using the threshold supplied from the header decoding unit 312, and set the local coordinate systems. Alternatively, the local coordinate system setting unit 317 may employ Method 1-3, derive vertex normal vectors by the combination method using the weight values supplied from the header decoding unit 312, and set the local coordinate systems.

The displacement vector application unit 318 employs Method 1 described above, and applies the local coordinates (displacement vectors) supplied from the unpacking unit 316 to the vertices of the subdivided base mesh supplied from the subdivision unit 314 to reconstruct a mesh. That is, the displacement vector application unit 318 applies the local coordinates (displacement vectors) to the vertices of the subdivided base mesh using the local coordinate systems supplied from the local coordinate system setting unit 317. In the present specification, this reconstructed mesh will also be referred to as a decoded mesh. That is, it can also be said that the displacement vector application unit 318 generates a decoded mesh. The displacement vector application unit 318 outputs the generated decoded mesh to the outside of the decoding device 300.

The attribute video decoding unit 319 decodes the coded data regarding the attribute video supplied from the demultiplexing unit 311, and generates (a current frame of) the attribute video. The attribute video decoding unit 319 outputs the current frame of the generated attribute video, that is, the attribute map corresponding to the decoded mesh, to the outside of the decoding device 300.

### <Local Coordinate System Setting Unit>

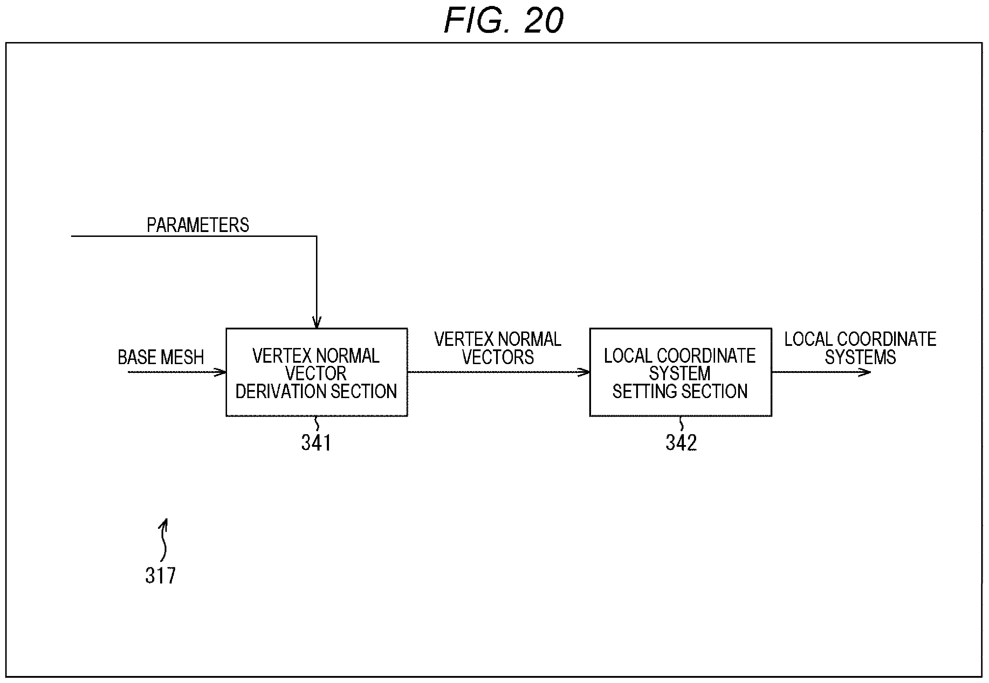

Fig. 20 is a block diagram illustrating a main configuration example of the local coordinate system setting unit 317. As illustrated in Fig. 20, the local coordinate system setting unit 317 includes a vertex normal vector derivation section 341 and a local coordinate system setting section 342.

The vertex normal vector derivation section 341 employs Method 1 described above, subdivides the supplied base mesh, and derives vertex normal vectors of vertices of the subdivided base mesh. Note that the vertex normal vector derivation section 341 may derive vertex normal vectors by employing one or more of the above-described Methods 1-1 to 1-3. For example, the vertex normal vector derivation section 341 may employ Method 1-1 and derive vertex normal vectors by the non-interpolated method. Furthermore, the vertex normal vector derivation section 341 may employ Method 1-2 and derive vertex normal vectors by the decoder selection method. In that case, the vertex normal vector derivation section 341 may derive the vertex normal vectors using the supplied threshold. Furthermore, the vertex normal vector derivation section 341 may employ Method 1-3 and derive vertex normal vectors by the combination method. In this case, the vertex normal vector derivation section 341 may derive the vertex normal vectors using the supplied weight values. The vertex normal vector derivation section 341 derives vertex normal vectors by the same method as that employed by the encoder (for example, the vertex normal vector derivation section 241 of the coding device 200). The vertex normal vector derivation section 341 supplies the derived vertex normal vectors to the local coordinate system setting section 342.

The local coordinate system setting section 342 employs Method 1 described above, and sets local coordinate systems based on the vertex normal vectors supplied from the vertex normal vector derivation section 341. For example, the local coordinate system setting section 342 sets each vertex normal vector as a coordinate axis and sets two other coordinate axes (bi-tangent, tangent and bi-tangent) perpendicular to the vertex normal vector to set a local coordinate system that is a Cartesian coordinate system. The local coordinate system setting section 342 sets a local coordinate system for each vertex normal vector. The local coordinate system setting section 342 supplies the set local coordinate systems to the displacement vector application unit 318.

With such a configuration, the decoding device 300 can suppress a decrease in the coding efficiency.

### <Flow of Decoding Process>

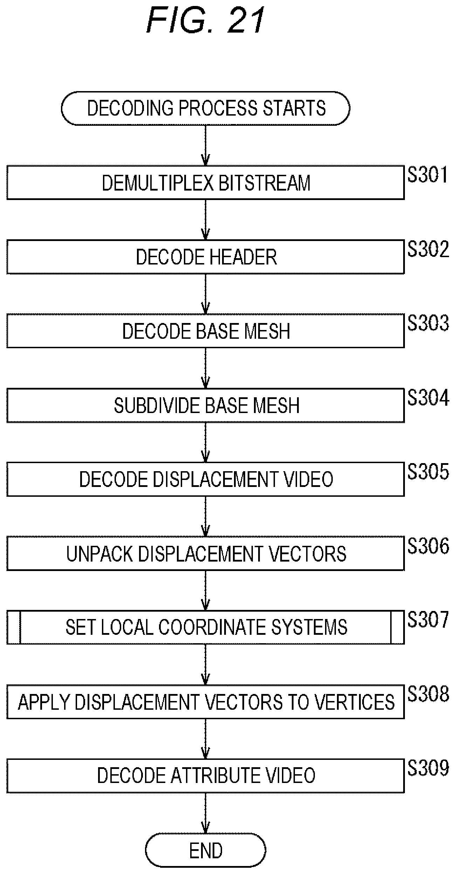

An example of a flow of a decoding process performed by the decoding device 300 will be described with reference to a flowchart of Fig. 21.

When the decoding process is started, the demultiplexing unit 311 demultiplexes, in step S301, a bitstream and extracts various types of coded data.

In step S302, the header decoding unit 312 employs Method 1 described above, decodes the coded data regarding a header extracted in step S301, and generates (restores) information stored in the header.

In step S303, the base mesh decoding unit 313 employs Method 1 described above, decodes the coded data regarding a base mesh extracted in step S301, and generates (restores) the base mesh.

In step S304, the subdivision unit 314 subdivides the base mesh.

In step S305, the displacement video decoding unit 315 applies Method 1 described above, decodes the coded data regarding a displacement video extracted in step S301, and generates (restores) (a current frame of) the displacement video.

In step S306, the unpacking unit 316 unpacks local coordinates (displacement vectors) from the current frame (two-dimensional image). At this time, the unpacking unit 316 may unpack transform coefficients and perform a coefficient transform (for example, a wavelet transform) on the transform coefficients to derive local coordinates (displacement vectors). Alternatively, the unpacking unit 316 may unpack quantized coefficients and inversely quantize the quantized coefficient to derive local coordinates (displacement vectors). Alternatively, the unpacking unit 316 may unpack the quantized coefficients, inversely quantize the quantization coefficients to derive transform coefficients, and perform a coefficient transform (for example, a wavelet transform) on the transform coefficients to derive local coordinates (displacement vectors).

In step S307, the local coordinate system setting unit 317 employs Method 1 described above and performs the process for setting local coordinate systems to set local coordinate systems. Note that the local coordinate system setting unit 317 may perform the process by employing one or more of the above-described Methods 1-1 to 1-3. For example, the local coordinate system setting unit 317 may employ Method 1-2, derive vertex normal vectors by the decoder selection method using the threshold supplied from the header decoding unit 312, and set the local coordinate systems. Alternatively, the local coordinate system setting unit 317 may employ Method 1-3, derive vertex normal vectors by the combination method using the weight values supplied from the header decoding unit 312, and set the local coordinate systems. Note that the local coordinate system setting unit 317 sets the local coordinate systems by the same method as that employed by the encoder (for example, the local coordinate system setting unit 212 of the coding device 200).

In step S308, the displacement vector application unit 318 employs Method 1 described above, applies the local coordinates (displacement vectors) unpacked in step S306 to vertices of the base mesh subdivided in step S304 using the local coordinate systems set in step S307, and generates a decoded mesh.

In step S309, the attribute video decoding unit 319 decodes the coded data regarding an attribute video extracted in step S301, and generates (restores) a current frame of the attribute video, that is, an attribute map.

When the processing in step S309 ends, the decoding process ends.

### <Flow 1 of Process for Setting Local Coordinate Systems in Decoding Process>

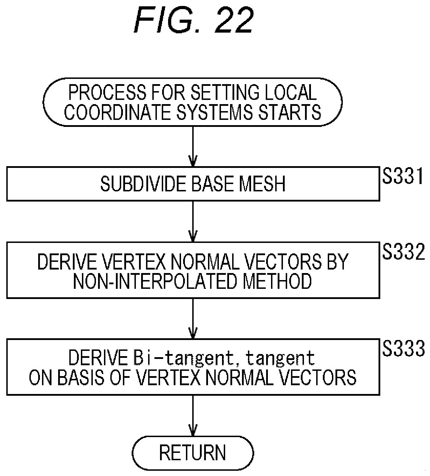

Next, the process for setting local coordinate systems performed in step S307 of Fig. 21 will be described. First, an example of a flow of the process for setting local coordinate systems when Method 1-1 is employed, that is, when vertex normal vectors are derived by the non-interpolated method, will be described with reference to a flowchart of Fig. 22.

When the process for setting local coordinate systems is started, the vertex normal vector derivation section 341 subdivides, in step S331, the base mesh to generate subdivision points.

In step S332, the vertex normal vector derivation section 341 derives a vertex normal vector for each of vertices of the subdivided base mesh by the "non-interpolated method" described above in <3. Local Coordinate Systems for Coding>.

In step S333, the local coordinate system setting section 342 sets each vertex normal vector derived in step S332 as a coordinate axis and sets two other coordinate axes (bi-tangent, tangent and bi-tangent) perpendicular to the vertex normal vector to set a local coordinate system that is a Cartesian coordinate system.

When the processing in step S333 ends, the process for setting local coordinate systems ends, and the process returns to Fig. 21.

### <Flow 2 of Process for Setting Local Coordinate Systems in Decoding Process>

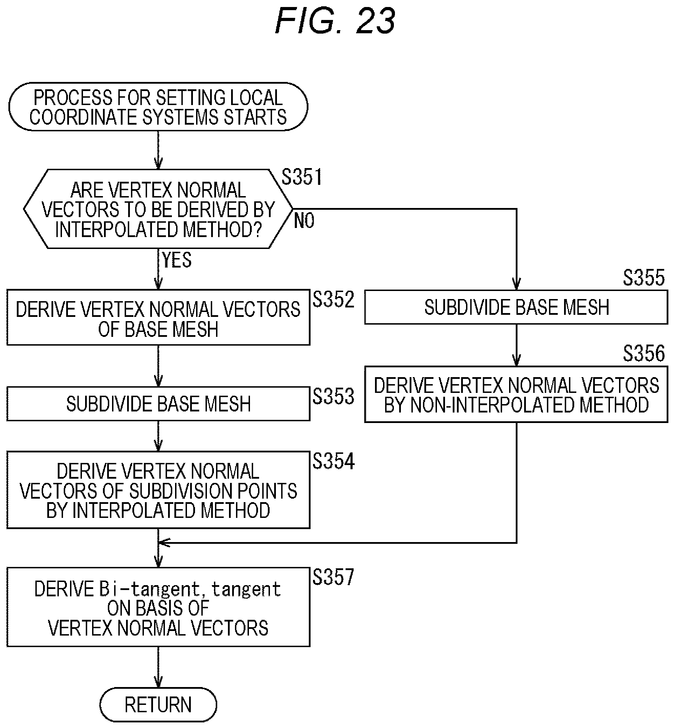

Next, an example of a flow of the process for setting local coordinate systems when Method 1-2 is employed, that is, when vertex normal vectors are derived by the decoder selection method, will be described with reference to a flowchart of Fig. 23.

When the process for setting local coordinate systems is started, the vertex normal vector derivation section 341 determines (selects), in step S351, whether or not to derive vertex normal vectors by the "interpolated method".

This selection method may be any method as long as the selection method is the same as that employed by the encoder. For example, which of the "interpolated method" and the "non-interpolated method" is to be selected may be determined on the basis of a relationship between orientations (differences in orientation) of faces of the base mesh (that is, directions of normal vectors). For example, the vertex normal vector derivation section 341 may perform threshold determination on a difference in orientation between a processing target face and a surrounding face, and if the difference is smaller than a threshold (or smaller than or equal to the threshold), select the "non-interpolated method" and if not, select the "interpolated method". For example, the vertex normal vector derivation section 341 may obtain an inner product of the normal vector of the processing target face and the vertex normal vector of each vertex of the processing target face, compare a minimum value of the inner products with a threshold, and if the minimum value of the inner products is smaller (or if the minimum value of the inner products is equal to the threshold) select the first method, and if not (if the minimum value of the inner products is larger or if the minimum value of the inner product is equal to the threshold), select the second method.

Note that this threshold may be determined in advance or may be variable. That is, the encoder and the decoder may have a common threshold in advance, or a threshold used by the encoder may be transmitted to the decoder (the vertex normal vector derivation section 341 may use the threshold transmitted from the encoder).

If it is determined that vertex normal vectors are to be derived by the "interpolated method", the process proceeds to step S352.

In step S352, the vertex normal vector derivation section 341 derives vertex normal vectors of the base mesh.

In step S353, the vertex normal vector derivation section 341 subdivides the base mesh.

In step S354, the vertex normal vector derivation section 341 derives the vertex normal vectors of the subdivision points by the "interpolated method". When the processing in step S354 ends, the process proceeds to step S357.

If it is determined in step S351 that the vertex normal vectors are to be derived by the "non-interpolated method", on the other hand, the process proceeds to step S355.

In step S355, the vertex normal vector derivation section 341 subdivides the base mesh.

In step S356, the vertex normal vector derivation section 341 derives a vertex normal vector for each of vertices of the subdivided base mesh by the "non-interpolated method" described above in <3. Local Coordinate Systems for Coding>. When the processing in step S356 ends, the process proceeds to step S357.

In step S357, the local coordinate system setting section 342 sets each vertex normal vector derived as described above as a coordinate axis and sets two other coordinate axes (bi-tangent, tangent and bi-tangent) perpendicular to the vertex normal vector to set a local coordinate system that is a Cartesian coordinate system.

When the processing in step S357 ends, the process for setting local coordinate systems ends, and the process returns to Fig. 21.

### <Flow 3 of Process for Setting Local Coordinate Systems in Decoding Process>

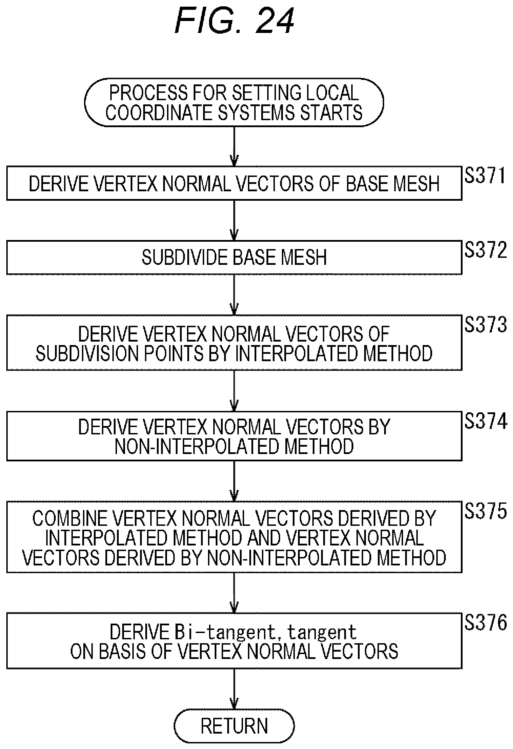

Next, an example of a flow of the process for setting local coordinate systems when Method 1-3 is employed, that is, when vertex normal vectors are derived by the combination method, will be described with reference to a flowchart of Fig. 24.

When the process for setting local coordinate systems is started, the vertex normal vector derivation section 341 derives vertex normal vectors of the base mesh in step S371.

In step S372, the vertex normal vector derivation section 341 subdivides the base mesh.

In step S373, the vertex normal vector derivation section 341 derives the vertex normal vectors of the subdivision points by the "interpolated method". That is, the vertex normal vector of each of vertices of the subdivided base mesh is derived by the "interpolated method" through the processing in steps S371 to S373.

In step S374, the vertex normal vector derivation section 341 derives a vertex normal vector for each of vertices of the base mesh subdivided in step S372 by the "non-interpolated method" described above in <3. Local Coordinate Systems for Coding>.

In step S375, the vertex normal vector derivation section 341 combines the vertex normal vectors derived by the "interpolated method" and the vertex normal vectors derived by the "non-interpolated method" together to derive composite vectors. At this time, the vertex normal vector derivation section 341 may combine the vertex normal vectors derived by the "interpolated method" and the vertex normal vectors derived by the "non-interpolated method" through weighted averaging. A weight value applied to the weighted averaging may be different between an edge vertex and a non-edge vertex. Furthermore, the weight value may be changed for each face, may be changed for each edge, or may be changed for each vertex of the base mesh. In addition, the weight values may be determined in advance or may be variable. That is, the encoder and the decoder may have common weight values in advance, or weight values used by the encoder may be transmitted to the decoder (the vertex normal vector derivation section 341 may use the weight values transmitted from the encoder).

In step S376, the local coordinate system setting section 342 sets each vertex normal vector (composite vector) derived as described above as a coordinate axis and sets two other coordinate axes (bi-tangent, tangent and bi-tangent) perpendicular to the vertex normal vector to set a local coordinate system that is a Cartesian coordinate system.

When the processing in step S376 ends, the process for setting local coordinate systems ends, and the process returns to Fig. 21.

By performing each process as described above, the decoding device 300 can suppress a decrease in the coding efficiency.

### <Employment of Method 1-4>

### <Local Coordinate Setting Unit of Coding Device>

The coding device 200 may employ Method 1-4 described above. That is, the coding device 200 may derive vertex normal vectors by the "flag method", set local coordinate systems using the derived vertex normal vectors, and derive local coordinates of displacement vectors using the local coordinate systems.

In this case, too, the coding device 200 has a configuration similar to that in the case described with reference to Fig. 13. Each processing unit performs processing similar to that in the case of Fig. 13. The local coordinate system setting unit 212, however, sets local coordinate systems by employing Method 1-4 described above. That is, the local coordinate system setting unit 212 derives vertex normal vectors by the flag method, and sets local coordinate systems using the derived vertex normal vectors. The local coordinate system setting unit 212, therefore, generates a method designation flag indicating the derivation method employed at this time, supplies the method designation flag to the header coding unit 220, and stores the method designation flag in a header. The header coding unit 220 codes the header including the method designation flag. That is, the header coding unit 220 codes the method designation flag. The combination unit 221 stores coded data regarding the header (method designation flag) in a bitstream. This bit stream is transmitted to the decoder via any transmission path or storage medium. That is, the method designation flag is transmitted to the decoder. Note that the method designation flag may be transmitted in any data units. For example, the method designation flag may be transmitted for each sequence of an original mesh, the method designation flag may be transmitted for each frame, the method designation flag may be transmitted for each base mesh, the method designation flag may be transmitted for each face of a base mesh, or the method designation flag may be transmitted for each vertex of a base mesh.

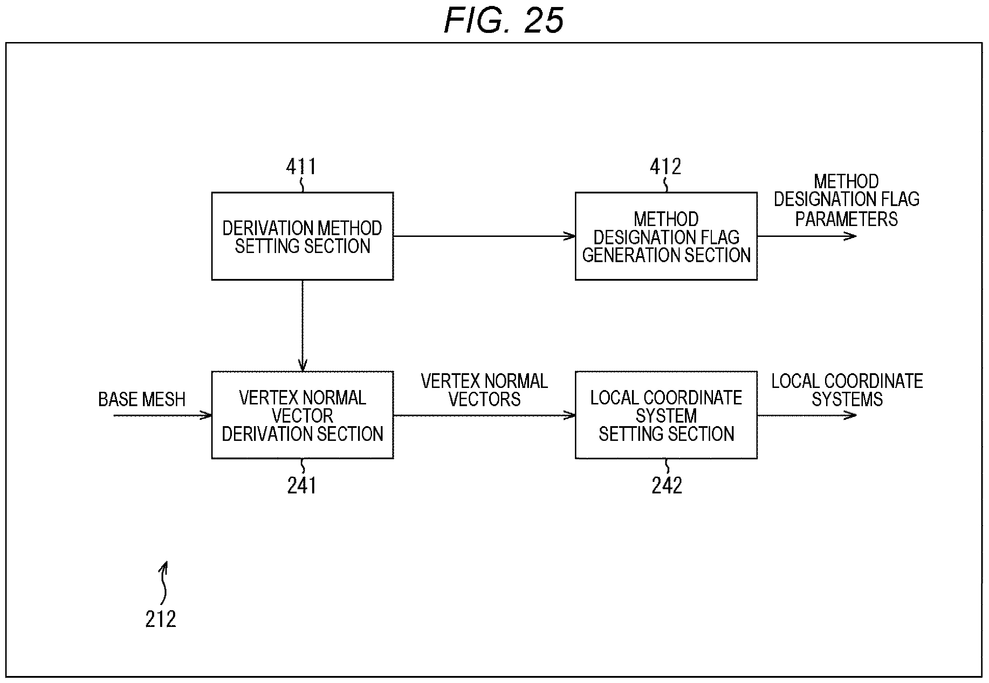

Fig. 25 illustrates a main configuration example of the local coordinate system setting unit 212 in this case. As illustrated in Fig. 25, the local coordinate system setting unit 212 in this case includes a derivation method setting section 411 and a method designation flag generation section 412 in addition to the configuration (the vertex normal vector derivation section 241 and the local coordinate system setting section 242) illustrated in Fig. 14.

The derivation method setting section 411 employs Method 1-4 described above and sets a method for deriving vertex normal vectors. For example, the derivation method setting section 411 may set the "interpolated method", the "non-interpolated method", the "decoder selection method", and the "combination method" as candidates, select one of these candidates, and employ the selected one as the method for deriving vertex normal vectors. Note that the derivation method may be selected by any method. Furthermore, the derivation method setting section 411 may set the method for deriving vertex normal vectors in any data units. For example, the derivation method setting section 411 may set the method for deriving vertex normal vectors for each sequence of an original mesh, for each frame, for each base mesh, for each face of a base mesh, or for each vertex of a base mesh. The derivation method setting section 411 notifies the vertex normal vector derivation section 241 and the method designation flag generation section 412 of the set derivation method.

The vertex normal vector derivation section 241 derives vertex normal vectors by the derivation method set by the derivation method setting section 411. For example, the vertex normal vector derivation section 241 may derive vertex normal vectors by employing the "interpolated method", the "non-interpolated method", the "decoder selection method", or the "combination method". Each derivation method is as described above.

The vertex normal vector derivation section 241 supplies the derived vertex normal vectors to the local coordinate system setting section 242. As in the case of Fig. 14, the local coordinate system setting section 242 sets local coordinate systems using the vertex normal vectors.

The method designation flag generation section 412 generates a method designation flag, which is flag information indicating the derivation method set by the derivation method setting section 411. The method designation flag generation section 412 may generate the method designation flag in any data units. For example, the method designation flag generation section 412 may generate the method designation flag for each sequence of an original mesh, for each frame, for each base mesh, for each face of a base mesh, or for each vertex of a base mesh. The method designation flag generation section 412 supplies the generated method designation flag to the header coding unit 220.

With such a configuration, the coding device 200 can derive vertex normal vectors by employing Method 1-4. The coding device 200, therefore, can suppress a decrease in the coding efficiency.

### <Flow 4 of Process for Setting Local Coordinate Systems in Coding Process>

When Method 1-4 is employed, the coding process is performed in a flow similar to that in the case of the flowchart of Fig. 15. In step S202, however, the local coordinate system setting unit 212 employs Method 1-4 described above and performs the process for setting local coordinate systems to set local coordinate systems. In step S321, the header coding unit 220 then codes a header including the method designation flag generated in step S202.

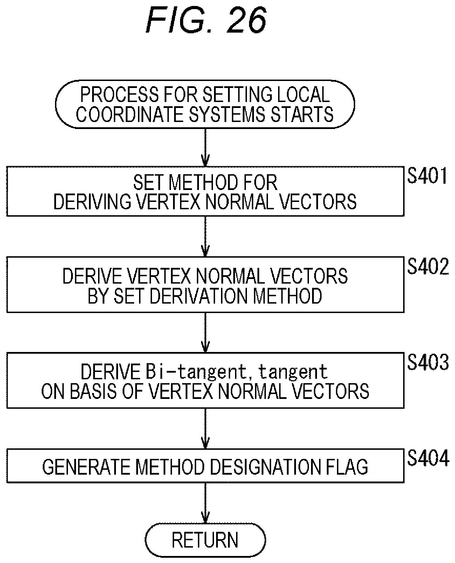

An example of a flow of the process for setting local coordinate systems (step S202) in this case will be described with reference to a flowchart of Fig. 26.

When the process for setting local coordinate systems is started, the derivation method setting section 411 employs, in step S401, Method 1-4 described above and sets a method for deriving vertex normal vectors. For example, the derivation method setting section 411 may set the "interpolated method", the "non-interpolated method", the "decoder selection method", and the "combination method" as candidates, select one of these candidates, and employ the selected one as the method for deriving vertex normal vectors. Note that the derivation method may be selected by any method. Furthermore, the derivation method setting section 411 may set the method for deriving vertex normal vectors in any data units. For example, the derivation method setting section 411 may set the method for deriving vertex normal vectors for each sequence of an original mesh, for each frame, for each base mesh, for each face of a base mesh, or for each vertex of a base mesh.

In step S402, the vertex normal vector derivation section 241 derives vertex normal vectors by the derivation method set in step S401. For example, the vertex normal vector derivation section 241 may derive vertex normal vectors by the "interpolated method", the "non-interpolated method", the "decoder selection method", or the "combination method".

In step S403, the local coordinate system setting section 242 sets each vertex normal vector derived in step S402 as a coordinate axis and sets two other coordinate axes (bi-tangent, tangent and bi-tangent) perpendicular to the vertex normal vector to set a local coordinate system that is a Cartesian coordinate system.

In step S404, the method designation flag generation section 412 generates a method designation flag indicating the derivation method set in step S401.

When the processing in step S404 ends, the process for setting local coordinate systems ends, and the process returns to Fig. 15.

By performing each process as described above, the coding device 200 can derive vertex normal vectors by employing Method 1-4. The coding device 200, therefore, can suppress a decrease in the coding efficiency.

### <Local Coordinate Setting Unit of Decoding Device>

Similarly, the decoding device 300, too, can employ Method 1-4 described above. That is, the decoding device 300 may derive vertex normal vectors by the "flag method", set local coordinate systems using the derived vertex normal vectors, and derive local coordinates of displacement vectors using the local coordinate systems. That is, the decoding device 300 may set a method for deriving vertex normal vectors on the basis of the method designation flag transmitted from the encoder, derive vertex normal vectors by the deriving method, set local coordinate systems using the derived vertex normal vectors, and derive local coordinates of displacement vectors using the local coordinate systems.

In this case, too, the decoding device 300 has a configuration similar to that in the case described with reference to Fig. 19. Each processing unit performs processing similar to that in the case of Fig. 19. The header decoding unit 312, however, decodes coded data regarding a header including the method designation flag, and generates (restores) the method designation flag transmitted from the encoder. The header decoding unit 312 then supplies the generated (restored) method designation flag to the local coordinate system setting unit 317.

The local coordinate system setting unit 317, however, sets local coordinate systems by employing Method 1-4 described above. That is, the local coordinate system setting unit 317 derives vertex normal vectors by the flag method, and sets local coordinate systems using the derived vertex normal vectors. That is, the local coordinate system setting unit 317 sets a method for deriving vertex normal vectors on the basis of the method designation flag supplied from the header decoding unit 312 (the method designation flag transmitted from the encoder), derives vertex normal vectors by the derivation method, and sets local coordinate systems using the derived vertex normal vectors.

Note that the method designation flag may be transmitted in any data units. For example, the method designation flag may be transmitted for each sequence of an original mesh, the method designation flag may be transmitted for each frame, the method designation flag may be transmitted for each base mesh, the method designation flag may be transmitted for each face of a base mesh, or the method designation flag may be transmitted for each vertex of a base mesh.

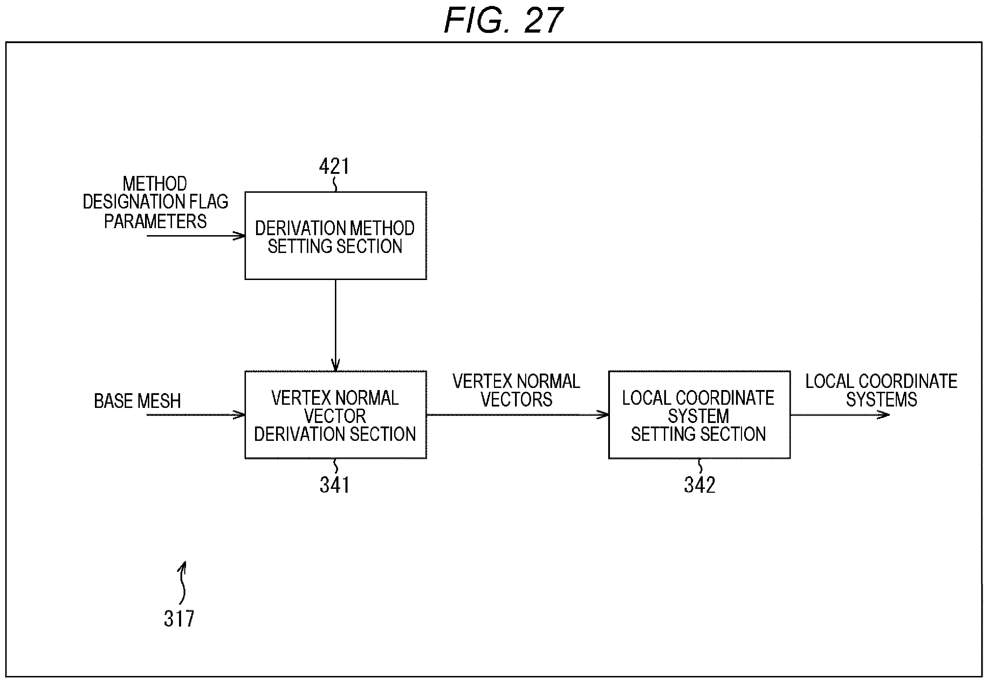

Fig. 27 illustrates a main configuration example of the local coordinate system setting unit 317 in this case. As illustrated in Fig. 27, the local coordinate system setting unit 317 in this case includes a derivation method setting section 421 in addition to the configuration (the vertex normal vector derivation section 241 and the local coordinate system setting section 242) illustrated in Fig. 20.

The derivation method setting section 421 employs Method 1-4 described above and sets a method for deriving vertex normal vectors. For example, the derivation method setting section 421 obtains the method designation flag supplied from the header decoding unit 312. The derivation method setting section 421 sets the derivation method indicated by the method designation flag as the method for deriving vertex normal vectors. The derivation method setting section 421 supplies the set derivation method to the vertex normal vector derivation section 341. Note that the derivation method setting section 421 may obtain another parameter (for example, a threshold, weight values, or the like transmitted from the encoder) as necessary and supply the parameter to the vertex normal vector derivation section 341.

The vertex normal vector derivation section 341 derives vertex normal vectors by the derivation method set by the derivation method setting section 421. For example, the vertex normal vector derivation section 341 may derive vertex normal vectors by employing the "interpolated method", the "non-interpolated method", the "decoder selection method", or the "combination method". Each derivation method is as described above.

The vertex normal vector derivation section 341 supplies the derived vertex normal vectors to the local coordinate system setting section 342. As in the case of Fig. 20, the local coordinate system setting section 342 sets local coordinate systems using the vertex normal vectors, and supplies the local coordinate systems to the displacement vector application unit 318.

With such a configuration, the decoding device 300 can derive vertex normal vectors by employing Method 1-4. The decoding device 300, therefore, can suppress a decrease in the coding efficiency.

### <Flow 4 of Process for Setting Local Coordinate Systems in Decoding Process>

When Method 1-4 is employed, the decoding process is performed in a flow similar to that in the case of the flowchart of Fig. 21. In step S302, however, the header decoding unit 312 decodes coded data regarding a header including the method designation flag and the like transmitted from the encoder. That is, the method designation flag transmitted from the encoder is generated (restored).

In step S307, the local coordinate system setting unit 317 then employs Method 1-4 described above and performs the process for setting local coordinate systems to set local coordinate systems.

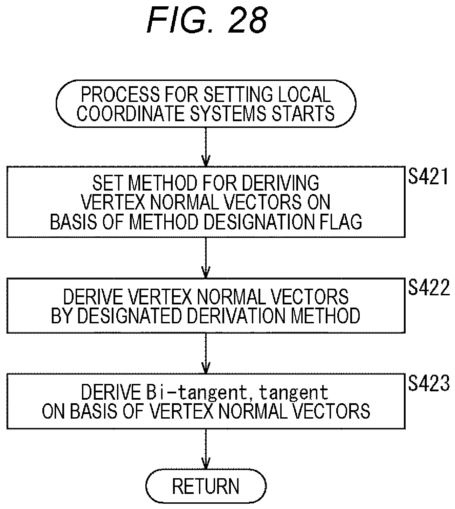

An example of a flow of the process for setting local coordinate systems (step S307) in this case will be described with reference to a flowchart of Fig. 28.

When the process for setting local coordinate systems is started, the derivation method setting section 421 employs, in step S421, Method 1-4 described above and sets a method for deriving vertex normal vectors. For example, the derivation method setting section 421 sets a method for deriving vertex normal vectors on the basis of the method designation flag transmitted from the encoder. For example, the derivation method setting section 421 may select a method designated by the method designation flag from among the "interpolated method", the "non-interpolated method", the "decoder selection method", and the "combination method", and employ the selected method as the method for deriving vertex normal vectors. Note that the derivation method may be selected by any method. Furthermore, the derivation method setting section 411 may set the method for deriving vertex normal vectors in any data units. For example, the derivation method setting section 411 may set the method for deriving vertex normal vectors for each sequence of an original mesh, for each frame, for each base mesh, for each face of a base mesh, or for each vertex of a base mesh.

In step S422, the vertex normal vector derivation section 341 derives vertex normal vectors by the derivation method set in step S421. For example, the vertex normal vector derivation section 341 may derive vertex normal vectors by the "interpolated method", the "non-interpolated method", the "decoder selection method", or the "combination method".

In step S423, the local coordinate system setting section 342 sets each vertex normal vector derived in step S422 as a coordinate axis and sets two other coordinate axes (bi-tangent, tangent and bi-tangent) perpendicular to the vertex normal vector to set a local coordinate system that is a Cartesian coordinate system.

When the processing in step S423 ends, the process for setting local coordinate systems ends, and the process returns to Fig. 21.

By performing each process as described above, the decoding device 300 can derive vertex normal vectors by employing Method 1-4. The decoding device 300, therefore, can suppress a decrease in the coding efficiency.

### <Employment of Method 1-5>

### <Local Coordinate Setting Unit of Coding Device>

The coding device 200 may employ Method 1-5 described above. That is, the coding device 200 may cluster derived vertex normal vectors using vertex normal vector candidates prepared in advance.

In this case, too, the coding device 200 has a configuration similar to that in the case described with reference to Fig. 13. Each processing unit performs processing similar to that in the case of Fig. 13. The local coordinate system setting unit 212, however, sets local coordinate systems by employing Method 1-5 described above. That is, the local coordinate system setting unit 212 clusters derived vertex normal vectors using vertex normal vector candidates prepared in advance.

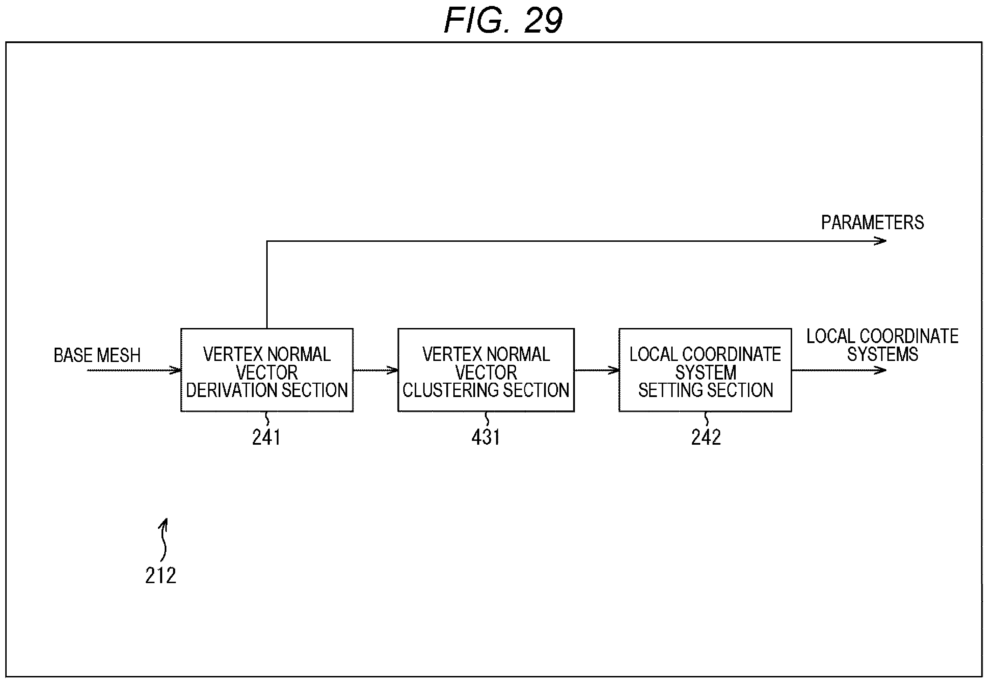

Fig. 29 illustrates a main configuration example of the local coordinate system setting unit 212 in this case. As illustrated in Fig. 29, the local coordinate system setting unit 212 in this case includes a vertex normal vector clustering section 431 between the vertex normal vector derivation section 241 and the local coordinate system setting section 242 illustrated in Fig. 14.

The vertex normal vector derivation section 241 derives vertex normal vectors. The derivation method may be any method. For example, the vertex normal vector derivation section 241 may derive vertex normal vectors by employing the "interpolated method", the "non-interpolated method", the "decoder selection method", or the "combination method". Each derivation method is as described above. The vertex normal vector derivation section 241 supplies the derived vertex normal vectors to the vertex normal vector clustering section 431. Furthermore, the vertex normal vector derivation section 241 supplies a parameter such as a threshold or weight values used to derive the vertex normal vectors to the header coding unit 220 as necessary, stores the parameter in a header, and codes the parameter.

The vertex normal vector clustering section 431 clusters the vertex normal vectors supplied from the vertex normal vector derivation section 241. For example, the vertex normal vector clustering section 431 performs clustering with predetermined normal vector candidates prepared in advance. The vertex normal vector clustering section 431 supplies vertex normal vectors that have replaced the derived vertex normal vectors as a result of the clustering to the local coordinate system setting section 242.

With such a configuration, the coding device 200 can limit orientations of local coordinate systems to orientations of candidates prepared in advance by employing Method 1-5. The coding device 200, therefore, can suppress a decrease in the coding efficiency.

### <Flow 5 of Process for Setting Local Coordinate Systems in Coding Process>

When Method 1-5 is employed, the coding process is performed in a flow similar to that in the case of the flowchart of Fig. 15. In step S202, however, the local coordinate system setting unit 212 employs Method 1-5 described above and performs the process for setting local coordinate systems to set local coordinate systems. That is, the local coordinate system setting unit 212 limits orientations of local coordinate systems to orientations of candidates prepared in advance.

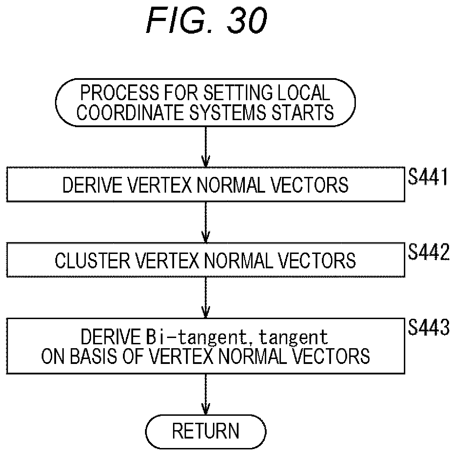

An example of a flow of the process for setting local coordinate systems (step S202) in this case will be described with reference to a flowchart of Fig. 30.

When the process for setting local coordinate systems is started, the vertex normal vector derivation section 241 derives vertex normal vectors in step S441. The derivation method may be any method. For example, the "interpolated method", the "non-interpolated method", the "decoder selection method", or the "combination method" may be employed.

In step S442, the vertex normal vector clustering section 431 clusters the vertex normal vectors derived in step S441. For example, the vertex normal vector clustering section 431 performs clustering with predetermined normal vector candidates prepared in advance.

In step S443, the local coordinate system setting section 242 sets each vertex normal vector derived in step S442 as a coordinate axis and sets two other coordinate axes (bi-tangent, tangent and bi-tangent) perpendicular to the vertex normal vector to set a local coordinate system that is a Cartesian coordinate system.

When the processing in step S443 ends, the process for setting local coordinate systems ends, and the process returns to Fig. 15.

By performing each process as described above, the coding device 200 can derive vertex normal vectors by employing Method 1-5. The coding device 200, therefore, can suppress a decrease in the coding efficiency.

### <Combination with Method 1-4>

Note that although a case where Method 1-5 is employed in the coding device 200 in which Methods 1-1 to 1-3 can be employed has been described in the above description, Method 1-5 may be employed in the coding device 200 in which Method 1-4 can be employed. In this case, in the local coordinate system setting unit 212 in the configuration example in Fig. 25, the above-described vertex normal vector clustering section 431 may be provided between the vertex normal vector derivation section 241 and the local coordinate system setting section 242. That is, in this case, too, the vertex normal vector clustering section 431 clusters vertex normal vectors derived by the vertex normal vector derivation section 241, and supplies the clustered vertex normal vectors to the local coordinate system setting section 242.

With such a configuration, the coding device 200 can derive vertex normal vectors by employing Method 1-5. The coding device 200, therefore, can suppress a decrease in the coding efficiency.

Furthermore, in this case, the processing in step S442 described above is only required to be performed between step S402 and step S403 in the process for setting local coordinate systems in the example in Fig. 26.

By performing each process like this, the coding device 200 can derive vertex normal vectors by employing Method 1-5. The coding device 200, therefore, can suppress a decrease in the coding efficiency.

### <Local Coordinate Setting Unit of Decoding Device>

Similarly, the decoding device 300, too, can employ Method 1-5 described above. That is, the decoding device 300 may cluster derived vertex normal vectors using vertex normal vector candidates prepared in advance.

In this case, too, the decoding device 300 has a configuration similar to that in the case described with reference to Fig. 19. Each processing unit performs processing similar to that in the case of Fig. 19. The local coordinate system setting unit 317, however, sets local coordinate systems by employing Method 1-5 described above. That is, the local coordinate system setting unit 317 clusters derived vertex normal vectors using vertex normal vector candidates prepared in advance.

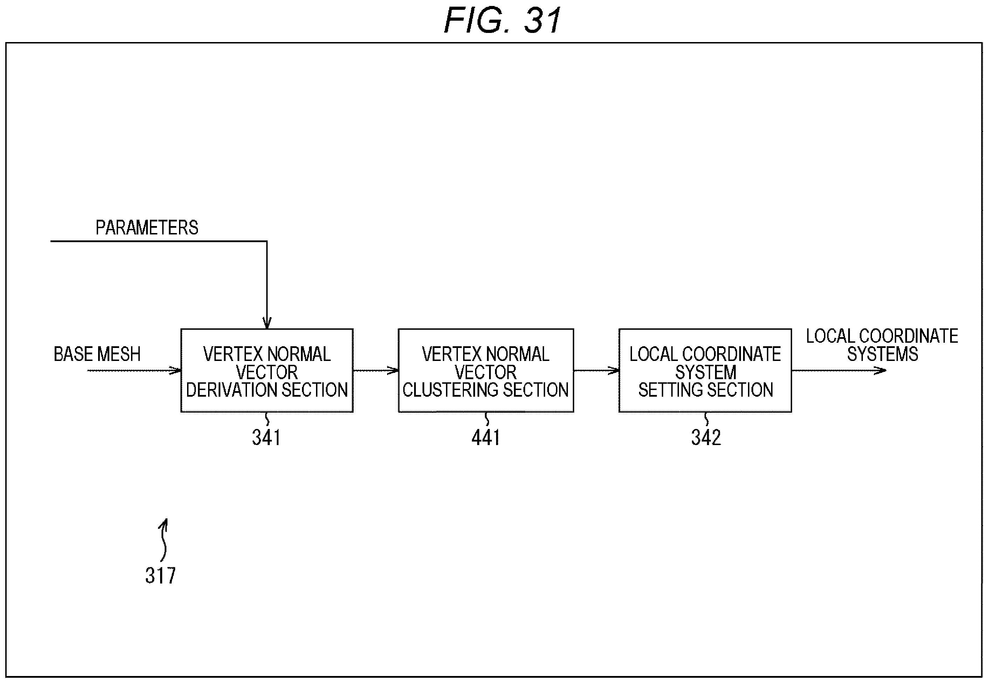

Fig. 31 illustrates a main configuration example of the local coordinate system setting unit 317 in this case. As illustrated in Fig. 31, the local coordinate system setting unit 317 in this case includes a vertex normal vector clustering section 441 between the vertex normal vector derivation section 341 and the local coordinate system setting section 342 illustrated in Fig. 20.

The vertex normal vector derivation section 341 derives vertex normal vectors. The derivation method may be any method. For example, the vertex normal vector derivation section 341 may derive vertex normal vectors by employing the "interpolated method", the "non-interpolated method", the "decoder selection method", or the "combination method". Each derivation method is as described above. The vertex normal vector derivation section 341 supplies the derived vertex normal vectors to the vertex normal vector clustering section 441. Furthermore, the vertex normal vector derivation section 341 may obtain a parameter such as a threshold or weight values supplied from the encoder as necessary, and use the parameter to derive vertex normal vectors.

The vertex normal vector clustering section 441 clusters the vertex normal vectors supplied from the vertex normal vector derivation section 341. For example, the vertex normal vector clustering section 441 performs clustering with predetermined normal vector candidates prepared in advance. The vertex normal vector clustering section 441 supplies vertex normal vectors that have replaced the derived vertex normal vectors as a result of the clustering to the local coordinate system setting section 342.

With such a configuration, the decoding device 300 can limit orientations of local coordinate systems to orientations of candidates prepared in advance by employing Method 1-5. The decoding device 300, therefore, can suppress a decrease in the coding efficiency.

### <Flow 5 of Process for Setting Local Coordinate Systems in Decoding Process>

When Method 1-5 is employed, the decoding process is performed in a flow similar to that in the case of the flowchart of Fig. 21. In step S307, however, the local coordinate system setting unit 317 employs Method 1-5 described above and performs the process for setting local coordinate systems to set local coordinate systems. That is, the local coordinate system setting unit 317 limits orientations of local coordinate systems to orientations of candidates prepared in advance.

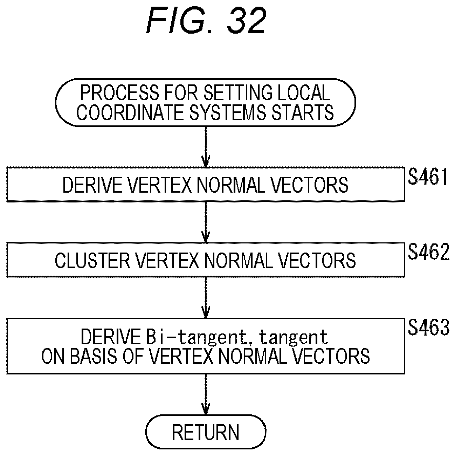

An example of a flow of the process for setting local coordinate systems (step S307) in this case will be described with reference to a flowchart of Fig. 32.

When the process for setting local coordinate systems is started, the vertex normal vector derivation section 341 derives vertex normal vectors in step S461. The derivation method may be any method. For example, the "interpolated method", the "non-interpolated method", the "decoder selection method", or the "combination method" may be employed.

In step S462, the vertex normal vector clustering section 441 clusters the vertex normal vectors derived in step S461. For example, the vertex normal vector clustering section 441 performs clustering with predetermined normal vector candidates prepared in advance.

In step S463, the local coordinate system setting section 342 sets each vertex normal vector derived in step S462 as a coordinate axis and sets two other coordinate axes (bi-tangent, tangent and bi-tangent) perpendicular to the vertex normal vector to set a local coordinate system that is a Cartesian coordinate system.

When the processing in step S463 ends, the process for setting local coordinate systems ends, and the process returns to Fig. 21.

By performing each process as described above, the decoding device 300 can derive vertex normal vectors by employing Method 1-5. The decoding device 300, therefore, can suppress a decrease in the coding efficiency.

### <Combination with Method 1-4>

Note that although a case where Method 1-5 is employed in the decoding device 300 in which Methods 1-1 to 1-3 can be employed has been described in the above description, Method 1-5 may be employed in the decoding device 300 in which Method 1-4 can be employed. In this case, in the local coordinate system setting unit 317 in the configuration example in Fig. 27, the above-described vertex normal vector clustering section 441 may be provided between the vertex normal vector derivation section 341 and the local coordinate system setting section 342. That is, in this case, too, the vertex normal vector clustering section 441 clusters vertex normal vectors derived by the vertex normal vector deriving section 341, and supplies the clustered vertex normal vectors to the local coordinate system setting section 342.

With such a configuration, the decoding device 300 can derive vertex normal vectors by employing Method 1-5. The decoding device 300, therefore, can suppress a decrease in the coding efficiency.

Furthermore, in this case, the processing in step S462 described above is only required to be performed between step S422 and step S423 in the process for setting local coordinate systems in the example in Fig. 28.

By performing each process like this, the decoding device 300 can derive vertex normal vectors by employing Method 1-5. The decoding device 300, therefore, can suppress a decrease in the coding efficiency.

### <Employment of Method 1-6>

### <Local Coordinate Setting Unit of Coding Device>

The coding device 200 may employ Method 1-6 described above. That is, the coding device 200 may quantize (orientations of) derived vertex normal vectors.

In this case, too, the coding device 200 has a configuration similar to that in the case described with reference to Fig. 13. Each processing unit performs processing similar to that in the case of Fig. 13. The local coordinate system setting unit 212, however, sets local coordinate systems by employing Method 1-6 described above. That is, the local coordinate system setting unit 212 quantizes (directions of) derived vertex normal vectors, for example, as described with reference to Fig. 12.

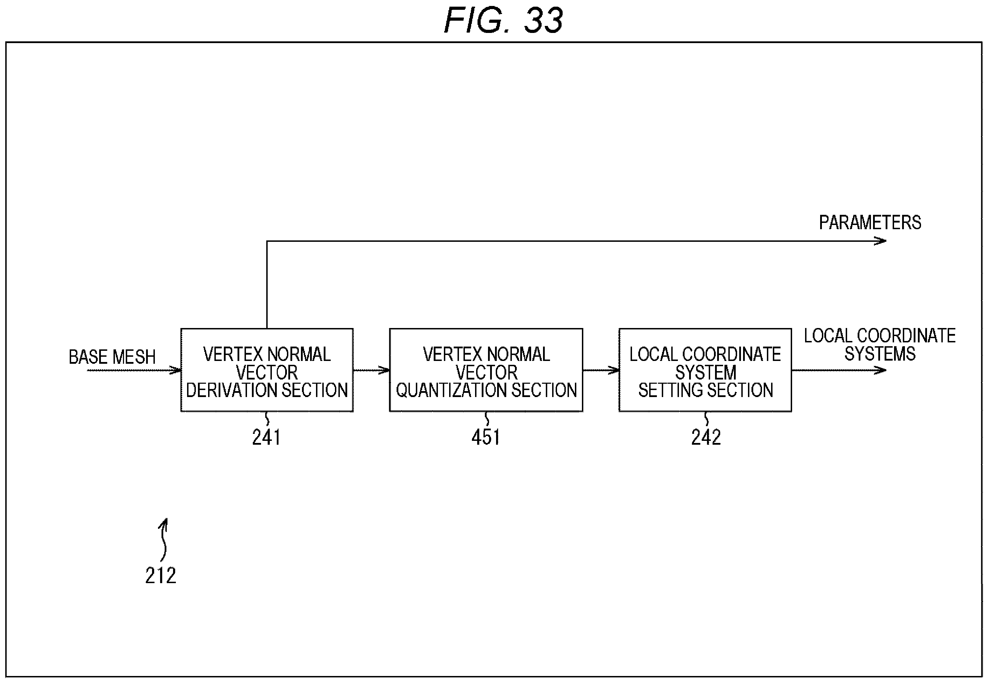

Fig. 33 illustrates a main configuration example of the local coordinate system setting unit 212 in this case. As illustrated in Fig. 33, the local coordinate system setting unit 212 in this case includes a vertex normal vector quantization section 451 between the vertex normal vector derivation section 241 and the local coordinate system setting section 242 illustrated in Fig. 14.

The vertex normal vector derivation section 241 derives vertex normal vectors. The derivation method may be any method. For example, the vertex normal vector derivation section 241 may derive vertex normal vectors by employing the "interpolated method", the "non-interpolated method", the "decoder selection method", or the "combination method". Each derivation method is as described above. The vertex normal vector derivation section 241 supplies the derived vertex normal vectors to the vertex normal vector quantization section 451.

Furthermore, the vertex normal vector derivation section 241 supplies a parameter such as a threshold or weight values used to derive the vertex normal vectors to the header coding unit 220 as necessary, stores the parameter in a header, and codes the parameter.

The vertex normal vector quantization section 451 quantizes (directions of) the vertex normal vectors supplied from the vertex normal vector derivation section 241. The quantization limits the orientations of the vertex normal vectors. That is, it is possible to suppress an increase in variation in the direction of each vertex normal vector. In other words, the quantization corrects and limits the orientations of the local coordinate systems. That is, it is possible to suppress an increase in variation in the orientation of each local coordinate system. The vertex normal vector quantization section 451 supplies the vertex normal vectors whose directions have been corrected through the quantization to the local coordinate system setting section 242.

With such a configuration, the coding device 200 can limit orientations of local coordinate systems by employing Method 1-6. The coding device 200, therefore, can suppress a decrease in the coding efficiency.

### <Flow 6 of Process for Setting Local Coordinate Systems in Coding Process>

When Method 1-6 is employed, the coding process is performed in a flow similar to that in the case of the flowchart of Fig. 15. In step S202, however, the local coordinate system setting unit 212 employs Method 1-6 described above and performs the process for setting local coordinate systems to set local coordinate systems. That is, the local coordinate system setting unit 212 limits orientations of local coordinate systems to orientations of candidates prepared in advance.

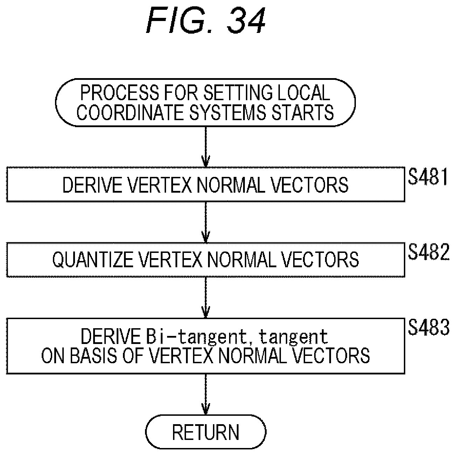

An example of a flow of the process for setting local coordinate systems (step S202) in this case will be described with reference to a flowchart of Fig. 34.

When the process for setting local coordinate systems is started, the vertex normal vector derivation section 241 derives vertex normal vectors in step S481. The derivation method may be any method. For example, the "interpolated method", the "non-interpolated method", the "decoder selection method", or the "combination method" may be employed.

In step S482, the vertex normal vector quantization section 451 quantizes (directions of) the vertex normal vectors derived in step S481.

In step S483, the local coordinate system setting section 242 sets each vertex normal vector derived in step S482 as a coordinate axis and sets two other coordinate axes (bi-tangent, tangent and bi-tangent) perpendicular to the vertex normal vector to set a local coordinate system that is a Cartesian coordinate system.

When the processing in step S483 ends, the process for setting local coordinate systems ends, and the process returns to Fig. 15.

By performing each process as described above, the coding device 200 can derive vertex normal vectors by employing Method 1-6. The coding device 200, therefore, can suppress a decrease in the coding efficiency.

### <Combination with Method 1-4>

Note that although a case where Method 1-6 is employed in the coding device 200 in which Methods 1-1 to 1-3 can be employed has been described in the above description, Method 1-6 may be employed in the coding device 200 in which Method 1-4 can be employed. In this case, in the local coordinate system setting unit 212 in the configuration example in Fig. 25, the above-described vertex normal vector quantization section 451 may be provided between the vertex normal vector derivation section 241 and the local coordinate system setting section 242. That is, in this case, too, the vertex normal vector quantization section 451 quantizes (directions of) the vertex normal vectors derived by the vertex normal vector derivation section 241, and supplies the quantized vertex normal vectors to the local coordinate system setting section 242.

With such a configuration, the coding device 200 can derive vertex normal vectors by employing Method 1-6. The coding device 200, therefore, can suppress a decrease in the coding efficiency.

Furthermore, in this case, the processing in step S482 described above is only required to be performed between step S402 and step S403 in the process for setting local coordinate systems in the example in Fig. 26.

By performing each process like this, the coding device 200 can derive vertex normal vectors by employing Method 1-6. The coding device 200, therefore, can suppress a decrease in the coding efficiency.

### <Local Coordinate Setting Unit of Decoding Device>

Similarly, the decoding device 300, too, can employ Method 1-6 described above. That is, the decoding device 300 may quantize (directions of) derived vertex normal vectors.

In this case, too, the decoding device 300 has a configuration similar to that in the case described with reference to Fig. 19. Each processing unit performs processing similar to that in the case of Fig. 19. The local coordinate system setting unit 317, however, sets local coordinate systems by employing Method 1-6 described above. That is, the local coordinate system setting unit 317 quantizes (directions of) derived vertex normal vectors.

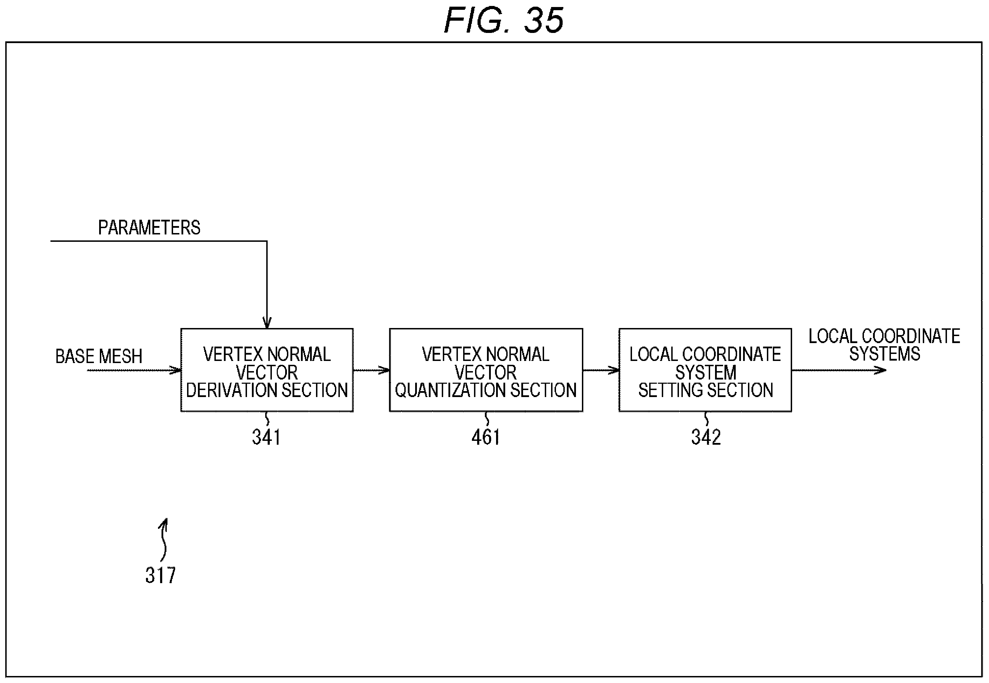

Fig. 35 illustrates a main configuration example of the local coordinate system setting unit 317 in this case. As illustrated in Fig. 35, the local coordinate system setting unit 317 in this case includes a vertex normal vector quantization section 461 between the vertex normal vector derivation section 341 and the local coordinate system setting section 342 illustrated in Fig. 20.

The vertex normal vector derivation section 341 derives vertex normal vectors. The derivation method may be any method. For example, the vertex normal vector derivation section 341 may derive vertex normal vectors by employing the "interpolated method", the "non-interpolated method", the "decoder selection method", or the "combination method". Each derivation method is as described above. The vertex normal vector derivation section 341 supplies the derived vertex normal vectors to the vertex normal vector quantization section 461.

Furthermore, the vertex normal vector derivation section 341 may obtain a parameter such as a threshold or weight values supplied from the encoder as necessary, and use the parameter to derive vertex normal vectors.

The vertex normal vector quantization section 461 quantizes (directions of) the vertex normal vectors supplied from the vertex normal vector derivation section 341. The vertex normal vector quantization section 461 corrects (the directions of) the derived vertex normal vectors through the quantization. The quantization limits the orientations of the vertex normal vectors. That is, it is possible to suppress an increase in variation in the direction of each vertex normal vector. In other words, the quantization corrects and limits the orientations of the local coordinate systems. That is, it is possible to suppress an increase in variation in the orientation of each local coordinate system. The vertex normal vector quantization section 461 supplies the quantized vertex normal vectors to the local coordinate system setting section 342.

With such a configuration, the decoding device 300 can limit orientations of local coordinate systems by employing Method 1-6. The decoding device 300, therefore, can suppress a decrease in the coding efficiency.

### <Flow 6 of Process for Setting Local Coordinate Systems in Decoding Process>

When Method 1-6 is employed, the decoding process is performed in a flow similar to that in the case of the flowchart of Fig. 21. In step S307, however, the local coordinate system setting unit 317 employs Method 1-6 described above and performs the process for setting local coordinate systems to set local coordinate systems. That is, the local coordinate system setting unit 317 can limit orientations of local coordinate systems.

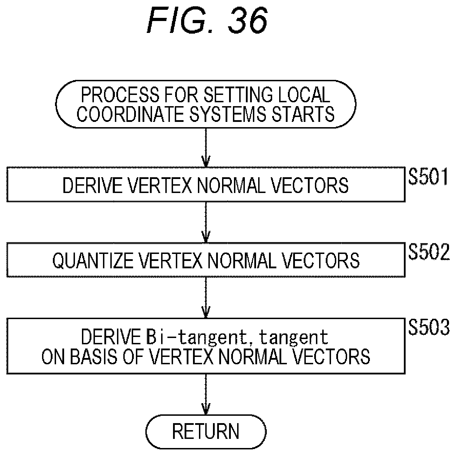

An example of a flow of the process for setting local coordinate systems (step S307) in this case will be described with reference to a flowchart of Fig. 36.

When the process for setting local coordinate systems is started, the vertex normal vector derivation section 341 derives vertex normal vectors in step S501. The derivation method may be any method. For example, the "interpolated method", the "non-interpolated method", the "decoder selection method", or the "combination method" may be employed.

In step S502, the vertex normal vector quantization section 461 quantizes (directions of) the vertex normal vectors derived in step S501.

In step S503, the local coordinate system setting section 342 sets each vertex normal vector derived in step S502 as a coordinate axis and sets two other coordinate axes (bi-tangent, tangent and bi-tangent) perpendicular to the vertex normal vector to set a local coordinate system that is a Cartesian coordinate system.

When the processing in step S503 ends, the process for setting local coordinate systems ends, and the process returns to Fig. 21.

By performing each process as described above, the decoding device 300 can derive vertex normal vectors by employing Method 1-6. The decoding device 300, therefore, can suppress a decrease in the coding efficiency.

### <Combination with Method 1-4>

Note that although a case where Method 1-6 is employed in the decoding device 300 in which Methods 1-1 to 1-3 can be employed has been described in the above description, Method 1-6 may be employed in the decoding device 300 in which Method 1-4 can be employed. In this case, in the local coordinate system setting unit 317 in the configuration example in Fig. 27, the above-described vertex normal vector quantization section 461 may be provided between the vertex normal vector derivation section 341 and the local coordinate system setting section 342. That is, in this case, too, the vertex normal vector quantization section 461 quantizes (directions of) the vertex normal vectors derived by the vertex normal vector derivation section 341, and supplies the quantized vertex normal vectors to the local coordinate system setting section 342.

With such a configuration, the decoding device 300 can derive vertex normal vectors by employing Method 1-6. The decoding device 300, therefore, can suppress a decrease in the coding efficiency.

Furthermore, in this case, the processing in step S502 described above is only required to be performed between step S422 and step S423 in the process for setting local coordinate systems in the example in Fig. 28.

By performing each process like this, the decoding device 300 can derive vertex normal vectors by employing Method 1-6. The decoding device 300, therefore, can suppress a decrease in the coding efficiency.

### <5. Appendix>

### <Computer>

The above-described series of processing can be executed by hardware or software. When a series of processing is executed by software, a program included in the software is installed on a computer. Here, the computer includes a computer incorporated in dedicated hardware, a general-purpose personal computer capable of executing various functions by installing various programs, and the like, for example.

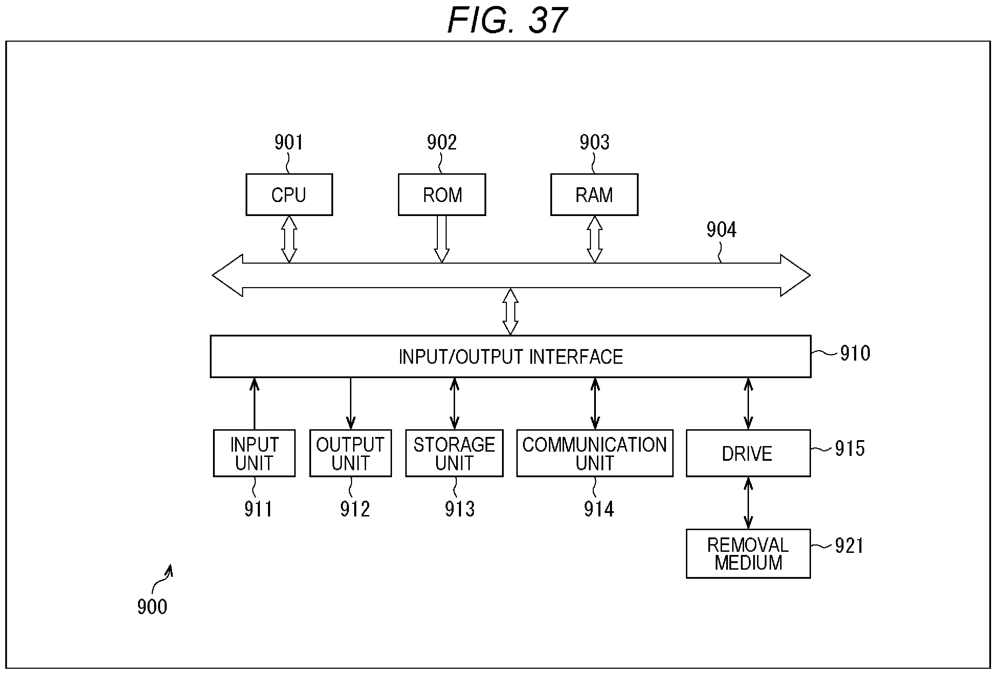

Fig. 37 is a block diagram illustrating a configuration example of hardware of a computer that executes the series of processes described above by a program.

In a computer 900 illustrated in Fig. 37, a central processing unit (CPU) 901, a read only memory (ROM) 902, and a random access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory and the like. The communication unit 914 includes, for example, a network interface. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processing is performed. Furthermore, the RAM 903 also appropriately stores data and the like necessary for the CPU 901 to execute various types of processing.

A program executed by the computer can be applied by being recorded on the removable medium 921 as a package medium, or the like, for example. In this case, the program can be installed in the storage unit 913 through the input/output interface 910 by attaching the removable medium 921 to the drive 915.

Furthermore, the program can also be provided through a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

### <Applicable Target of Present Technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices through a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

### <Fields and Usage to Which Present Technology Is Applicable>

The system, device, processing unit and the like to which the present technology is applied can be used in any field such as traffic, medical care, crime prevention, agriculture, livestock industry, mining, beauty care, factory, household appliance, weather, and natural surveillance, for example. Furthermore, application thereof is also arbitrary.

### <Others>

Note that, in the present specification, a "flag" is information for identifying a plurality of states, and includes not only information used for identifying two states of true (1) and false (0) but also information capable of identifying three or more states. Hence, a value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only identification information thereof in a bitstream but also difference information of the identification information with respect to certain reference information in the bitstream, and thus, in the present specification, the "flag" and "identification information" include not only the information thereof but also the difference information with respect to the reference information.

Furthermore, various kinds of information (such as metadata) related to coded data (a bitstream) may be transmitted or recorded in any form as long as it is associated with the coded data. Here, the term "associating" means, when processing one data, allowing other data to be used (to be linked), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be of not entire data but a part of data. For example, an image and information corresponding to the image may be associated with each other in any unit such as a plurality of frames, one frame, or a part within a frame.

Note that, in the present specification, terms such as "combine", "multiplex", "add", "integrate", "include", "store", "put in", "introduce", and "insert" mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, when the configuration and operation as the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block and the like) and obtain necessary information.

Furthermore, for example, each step in one flowchart may be executed by one device, or may be executed by being shared by a plurality of devices. Moreover, when a plurality of pieces of processing is included in one step, the plurality of pieces of processing may be executed by one device, or may be shared and executed by a plurality of devices. In other words, a plurality of pieces of processing included in one step can be executed as a plurality of steps. Conversely, the processes described as the plurality of the steps can also be collectively executed as one Step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the processing of each step may be executed in an order different from the above-described order. Moreover, the processes in the steps describing the program may be executed in parallel with processes of another program, or may be executed in combination with processes of the another program.

Furthermore, for example, a plurality of technologies related to the present technology can be implemented independently as a single entity as long as there is no contradiction. It goes without saying that any plurality of present technology can be implemented in combination. For example, a part or all of the present technology described in any of the embodiments can be implemented in combination with a part or all of the present technology described in other embodiments. Furthermore, a part or all of any of the above-described present technology can be implemented together with another technology that is not described above.

Note that the present technology can also have the following configurations.
(1) An information processing device including:
   a derivation method setting section that sets a method of deriving vertex normal vectors, which are normal vectors of vertices of a subdivided base mesh;
   a vertex normal vector derivation unit that derives the vertex normal vectors by the set derivation method;
   a local coordinate derivation unit that derives local coordinates representing displacement vectors in local coordinate systems corresponding to the vertex normal vectors;
   a displacement video coding unit that codes a displacement video including, as frames, 2D images storing the local coordinates as the displacement vectors;
   a method designation flag generation unit that generates a method designation flag which designates the set derivation method; and
   a method designation flag coding unit that codes the method designation flag, in which
   the base mesh is a mesh that is generated by decimating vertices of an original mesh to be coded including the vertices and connections representing a three-dimensional structure of an object and that is coarser than the original mesh,
   the displacement vectors are differences in position between the vertices of the subdivided base mesh and the vertices of the original mesh, and
   the local coordinate systems are coordinate systems for each of the vertices of the subdivided base mesh set on the basis of the vertex normal vectors.
(2) The information processing device according to (1), in which
   the derivation method setting section selects a first method in which weighting according to a position of a processing target point, which is a processing target vertex of the subdivided base mesh, is performed and the vertex normal vector of the processing target point is derived using normal vectors of faces surrounding the processing target point, a second method in which the vertex normal vector of the processing target point is derived using the normal vectors of the surrounding faces without performing the weighting, a third method in which a decoder is caused to select which of the first method and the second method is to be employed, or a fourth method in which the vertex normal vector derived by employing the first method and the vertex normal vector derived by employing the second method are combined together and sets the selected method as a method for deriving vertex normal vectors.
(3) The information processing device according to (2), in which
   when the third method is selected, the vertex normal vector derivation unit selects the first method or the second method by the same method as that employed by the decoder, and derives the vertex normal vectors by employing the selected method.
(4) The information processing device according to (3), in which
   the vertex normal vector derivation unit selects the first method or the second method for each face of the base mesh on the basis of differences in orientation between the processing target face and surrounding faces.
(5) The information processing device according to (4), in which
   the vertex normal vector derivation unit obtains an inner product of a normal vector of the processing target face and the vertex normal vector of each vertex of the processing target face, compares a minimum value of the inner products with a threshold, and if the inner product is smaller, selects the first method, and if the inner product is larger, selects the second method.
(6) The information processing device according to (5), in which
   the method designation flag coding unit further codes the threshold.
(7) The information processing device according to any one of (2) to (6), in which
   when the fourth method is selected, the vertex normal vector derivation unit employs the first method and derives the first vertex normal vector, employs the second method and derives the second vertex normal vector, and combines the derived first vertex normal vector and the derived second vertex normal vector together through weighted averaging.
(8) The information processing device according to (7), in which
   the vertex normal vector derivation unit combines together the first vertex normal vector and the second vertex normal vector corresponding to a vertex located on an edge of a face of the base mesh through the weighted averaging using a first weight value and combines together the first vertex normal vector and the second vertex normal vector corresponding to a vertex located in a portion other than an edge through the weighted average using a second weight value different from the first weight value.
(9) The information processing device according to (7) or (8), in which
   the method designation flag coding unit further codes a weight value used for the weighted averaging.
(10) The information processing device according to any one of (1) to (9), in which
   the derivation method setting section sets the derivation method for each sequence of the original mesh, each frame, each base mesh, each face of the base mesh, or each vertex of the base mesh.
(11) The information processing device according to any one of (1) to (10), further including:
   a clustering unit that clusters the derived vertex normal vectors with predetermined normal vector candidates prepared in advance.
(12) The information processing device according to any one of (1) to (11), further including:
   a quantization unit that quantizes the derived vertex normal vectors.
(13) An information processing method including:
   setting a method for deriving vertex normal vectors, which are normal vectors of vertices of a subdivided base mesh;
   deriving the vertex normal vectors by the set derivation method;
   deriving local coordinates representing displacement vectors in local coordinate systems corresponding to the vertex normal vectors;
   coding a displacement video including, as frames, 2D images storing the local coordinates as the displacement vectors;
   generating a method designation flag that designates the set derivation method; and
   coding the method designation flag, in which
   the base mesh is a mesh that is generated by decimating vertices of an original mesh to be coded including the vertices and connections representing a three-dimensional structure of an object and that is coarser than the original mesh,
   the displacement vectors are difference in position between the vertices of the subdivided base mesh and the vertices of the original mesh, and
   the local coordinate systems are coordinate systems for each of the vertices of the subdivided base mesh set on the basis of the vertex normal vectors.
(21) An information processing device including:
   a base mesh decoding unit that decodes coded data regarding a base mesh;
   a displacement video decoding unit that decodes coded data regarding a displacement video including, as frames, 2D images storing local coordinates as displacement vectors;
   a vertex normal vector derivation unit that derives vertex normal vectors, which are normal vectors of vertices of the subdivided base mesh; and
   a displacement vector application unit that applies the local coordinates of the vertices to the vertices of the subdivided base mesh as the displacement vectors using local coordinate systems corresponding to the vertex normal vectors, in which
   the base mesh is a mesh that is generated by decimating vertices of an original mesh to be coded including the vertices and connections representing a three-dimensional structure of an object and that is coarser than the original mesh,
   the displacement vectors are differences in position between the vertices of the subdivided base mesh and the vertices of the original mesh,
   the local coordinate systems are coordinate systems for each of the vertices of the subdivided base mesh set on the basis of the vertex normal vectors, and
   the local coordinates are coordinates representing the displacement vectors of the vertices of the subdivided base mesh in the local coordinate systems corresponding to the vertex normal vectors of the vertices.
(22) The information processing device according to (21), in which
   the vertex normal vector derivation unit derives the vertex normal vector of a processing target point, which is a processing target vertex of the subdivided base mesh, using normal vectors of faces surrounding the processing target point.
(23) The information processing device according to (22), in which
   the vertex normal vector derivation unit derives an average of the normal vectors of the surrounding faces and uses the average as the vertex normal vector of the processing target point.
(24) The information processing device according to (22), in which
   the vertex normal vector derivation unit derives a weighted average of the normal vectors of the surrounding faces and uses the weighted average as the vertex normal vector of the processing target point.
(25) The information processing device according to (24), in which
   the vertex normal vector derivation unit derives the weighted average using weight values based on area of the surrounding faces.
(26) The information processing device according to (24), in which
   the vertex normal vector derivation unit derives the weighted average using weight values based on differences in orientation between the surrounding faces.
(27) The information processing device according to (24), in which
   the vertex normal vector derivation unit derives the weighted average using weight values based on area of the surrounding faces and differences in orientation between the surrounding faces.
(28) The information processing device according to any one of (21) to (27), in which
   the vertex normal vector derivation unit selects a first method in which weighting according to a position of a processing target point, which is a processing target vertex of the subdivided base mesh, is performed and the vertex normal vector of the processing target point is derived using normal vectors of faces surrounding the processing target point or a second method in which the vertex normal vector of the processing target point is derived using the normal vectors of the surrounding faces without performing the weighting and derives the vertex normal vectors using the selected method.
(29) The information processing device according to (28), in which
   the vertex normal vector derivation unit selects the first method or the second method for each face of the base mesh on the basis of differences in orientation between the processing target face and surrounding faces.
(30) The information processing device according to (29), in which
   the vertex normal vector derivation unit obtains an inner product of a normal vector of the processing target face and the vertex normal vector of each vertex of the processing target face, compares a minimum value of the inner products with a threshold, and if the inner product is smaller, selects the first method, and if the inner product is larger, selects the second method.
(31) The information processing device according to (30), in which
   the vertex normal vector derivation unit compares the threshold transmitted from an encoder with the minimum value of the inner products.
(32) The information processing device according to any one of (21) to (31), in which
   the vertex normal vector derivation unit performs a process including:
   deriving a first vertex normal vector of a processing target point, which is a processing target vertex of the subdivided base mesh, using normal vectors of faces surrounding the processing target point by performing weighting according to a position of the processing target point; and
   deriving a second vertex normal vector of the processing target point using the normal vectors of the surrounding faces without performing the weighting, and
   combining the derived first vertex normal vector and the derived second vertex normal vector together.
(33) The information processing device according to (32), in which
   the vertex normal vector derivation unit combines the derived first vertex normal vector and the derived second vertex normal vector together through weighted averaging.
(34) The information processing device according to (33), in which
   the vertex normal vector derivation unit combines together the first vertex normal vector and the second vertex normal vector corresponding to a vertex located on an edge of a face of the base mesh through the weighted averaging using a first weight value and combines together the first vertex normal vector and the second vertex normal vector corresponding to a vertex located in a portion other than an edge through the weighted average using a second weight value different from the first weight value.
(35) The information processing device according to (33) or (34), in which
   the vertex normal vector derivation unit combines the derived first vertex normal vector and the derived second vertex normal vector together through the weighted averaging using weight values transmitted from an encoder.
(36) The information processing device according to any one of (21) to (35), further including:
   a derivation method setting section that sets a method for deriving the vertex normal vectors on the basis of a method designation flag which designates the method for deriving vertex normal vectors, in which
   the vertex normal vector derivation unit derives the vertex normal vectors by the set derivation method.
(37) The information processing device according to (36), in which
   the derivation method setting section selects, in accordance with the method designation flag, a first method in which weighting according to a position of a processing target point, which is a processing target vertex of the subdivided base mesh, is performed and the vertex normal vector of the processing target point is derived using normal vectors of faces surrounding the processing target point, a second method in which the vertex normal vector of the processing target point is derived using the normal vectors of the surrounding faces without performing the weighting, a third method in which the first method or the second method is selected by a predetermined method, or a fourth method in which a first vertex normal vector derived by employing the first method and a second vertex normal vector derived by employing the second method are combined together and sets the selected method as the derivation method.
(38) The information processing device according to (36) or (37), in which
   the method designation flag designates the derivation method for each sequence of the original mesh, each frame, each base mesh, each face of the base mesh, or each vertex of the base mesh.
(39) The information processing device according to any one of (21) to (38), further including:
   a clustering unit that clusters the derived vertex normal vectors with predetermined normal vector candidates prepared in advance.
(40) The information processing device according to any one of (21) to (39), further including:
   a quantization unit that quantizes the derived vertex normal vectors.
(41) An information processing method including:
   decoding coded data regarding a base mesh;
   decoding coded data regarding a displacement video including, as frames, 2D images storing local coordinates as displacement vectors;
   deriving vertex normal vectors, which are normal vectors of vertices of the subdivided base mesh; and
   applying the local coordinates of the vertices to the vertices of the subdivided base mesh as the displacement vectors using local coordinate systems corresponding to the vertex normal vectors, in which
   the base mesh is a mesh that is generated by decimating vertices of an original mesh to be coded including the vertices and connections representing a three-dimensional structure of an object and that is coarser than the original mesh,
   the displacement vectors are differences in position between the vertices of the subdivided base mesh and the vertices of the original mesh,
   the local coordinate systems are coordinate systems for each of the vertices of the subdivided base mesh set on the basis of the vertex normal vectors, and
   the local coordinates are coordinates representing the displacement vectors of the vertices of the subdivided base mesh in the local coordinate systems corresponding to the vertex normal vectors of the vertices.

### REFERENCE SIGNS LIST

- 200: Coding device
- 211: Base mesh coding unit
- 212: Local coordinate system setting unit
- 213: Local coordinate derivation unit
- 214: Displacement vector correction unit
- 215: Packing unit
- 216: Video coding unit
- 217: Mesh reconstruction unit
- 218: Attribute map correction unit
- 219: Attribute video coding unit
- 220: Header coding unit
- 221: Combination unit
- 241: Vertex normal vector derivation section
- 242: Local coordinate system setting unit
- 300: Decoding device
- 311: Demultiplexing unit
- 312: Header decoding unit
- 313: Base mesh decoding unit
- 314: Subdivision unit
- 315: Displacement video decoding unit
- 316: Unpacking unit
- 317: Local coordinate system setting unit
- 318: Displacement vector application unit
- 319: Attribute video decoding unit
- 341: Vertex normal vector derivation section
- 342: Local coordinate system setting unit
- 411: Derivation method setting section
- 412: Method designation flag generation section
- 421: Derivation method setting section
- 431: Vertex normal vector clustering section
- 441: Vertex normal vector clustering section
- 451: Vertex normal vector quantization section
- 461: Vertex normal vector quantization section
- 900: Computer

## Claims

1. An information processing device comprising:
a base mesh decoding unit that decodes coded data regarding a base mesh;
a displacement video decoding unit that decodes coded data regarding a displacement video including, as frames, 2D images storing local coordinates as displacement vectors;
a vertex normal vector derivation unit that derives vertex normal vectors, which are normal vectors of vertices of the subdivided base mesh; and
a displacement vector application unit that applies the local coordinates of the vertices to the vertices of the subdivided base mesh as the displacement vectors using local coordinate systems corresponding to the vertex normal vectors, wherein
the base mesh is a mesh that is generated by decimating vertices of an original mesh to be coded including the vertices and connections representing a three-dimensional structure of an object and that is coarser than the original mesh,
the displacement vectors are differences in position between the vertices of the subdivided base mesh and the vertices of the original mesh,
the local coordinate systems are coordinate systems for each of the vertices of the subdivided base mesh set on a basis of the vertex normal vectors, and
the local coordinates are coordinates representing the displacement vectors of the vertices of the subdivided base mesh in the local coordinate systems corresponding to the vertex normal vectors of the vertices.

2. The information processing device according to claim 1, wherein
the vertex normal vector derivation unit derives the vertex normal vector of a processing target point, which is a processing target vertex of the subdivided base mesh, using normal vectors of faces surrounding the processing target point.

3. The information processing device according to claim 2, wherein
the vertex normal vector derivation unit derives an average of the normal vectors of the surrounding faces and uses the average as the vertex normal vector of the processing target point.

4. The information processing device according to claim 2, wherein
the vertex normal vector derivation unit derives a weighted average of the normal vectors of the surrounding faces and uses the weighted average as the vertex normal vector of the processing target point.

5. The information processing device according to claim 4, wherein
the vertex normal vector derivation unit derives the weighted average using weight values based on area of the surrounding faces.

6. The information processing device according to claim 4, wherein
the vertex normal vector derivation unit derives the weighted average using weight values based on differences in orientation between the surrounding faces.

7. The information processing device according to claim 4, wherein
the vertex normal vector derivation unit derives the weighted average using weight values based on area of the surrounding faces and differences in orientation between the surrounding faces.

8. The information processing device according to claim 1, wherein
the vertex normal vector derivation unit selects a first method in which weighting according to a position of a processing target point, which is a processing target vertex of the subdivided base mesh, is performed and the vertex normal vector of the processing target point is derived using normal vectors of faces surrounding the processing target point or a second method in which the vertex normal vector of the processing target point is derived using the normal vectors of the surrounding faces without performing the weighting and derives the vertex normal vectors using the selected method.

9. The information processing device according to claim 8, wherein
the vertex normal vector derivation unit selects the first method or the second method for each face of the base mesh on a basis of differences in orientation between the processing target face and surrounding faces.

10. The information processing device according to claim 9, wherein
the vertex normal vector derivation unit obtains an inner product of a normal vector of the processing target face and the vertex normal vector of each vertex of the processing target face, compares a minimum value of the inner products with a threshold, and if the inner product is smaller, selects the first method, and if the inner product is larger, selects the second method.

11. The information processing device according to claim 10, wherein
the vertex normal vector derivation unit compares the threshold transmitted from an encoder with the minimum value of the inner products.

12. The information processing device according to claim 1, wherein
the vertex normal vector derivation unit performs a process including:
deriving a first vertex normal vector of a processing target point, which is a processing target vertex of the subdivided base mesh, using normal vectors of faces surrounding the processing target point by performing weighting according to a position of the processing target point; and
deriving a second vertex normal vector of the processing target point using the normal vectors of the surrounding faces without performing the weighting, and
combining the derived first vertex normal vector and the derived second vertex normal vector together.

13. The information processing device according to claim 12, wherein
the vertex normal vector derivation unit combines the derived first vertex normal vector and the derived second vertex normal vector together through weighted averaging.

14. The information processing device according to claim 13, wherein
the vertex normal vector derivation unit combines the derived first vertex normal vector and the derived second vertex normal vector together through the weighted averaging using weight values transmitted from an encoder.

15. The information processing device according to claim 1, further comprising:
a derivation method setting section that sets a method for deriving the vertex normal vectors on a basis of a method designation flag which designates the method for deriving vertex normal vectors, wherein
the vertex normal vector derivation unit derives the vertex normal vectors by the set derivation method.

16. The information processing device according to claim 1, further comprising:
a clustering unit that clusters the derived vertex normal vectors with predetermined normal vector candidates prepared in advance.

17. The information processing device according to claim 1, further comprising:
a quantization unit that quantizes the derived vertex normal vectors.

18. An information processing method comprising:
decoding coded data regarding a base mesh;
decoding coded data regarding a displacement video including, as frames, 2D images storing local coordinates as displacement vectors;
deriving vertex normal vectors, which are normal vectors of vertices of the subdivided base mesh; and
applying the local coordinates of the vertices to the vertices of the subdivided base mesh as the displacement vectors using local coordinate systems corresponding to the vertex normal vectors, wherein
the base mesh is a mesh that is generated by decimating vertices of an original mesh to be coded including the vertices and connections representing a three-dimensional structure of an object and that is coarser than the original mesh,
the displacement vectors are differences in position between the vertices of the subdivided base mesh and the vertices of the original mesh,
the local coordinate systems are coordinate systems for each of the vertices of the subdivided base mesh set on a basis of the vertex normal vectors, and
the local coordinates are coordinates representing the displacement vectors of the vertices of the subdivided base mesh in the local coordinate systems corresponding to the vertex normal vectors of the vertices.

19. An information processing device comprising:
a derivation method setting section that sets a method of deriving vertex normal vectors, which are normal vectors of vertices of a subdivided base mesh;
a vertex normal vector derivation unit that derives the vertex normal vectors by the set derivation method;
a local coordinate derivation unit that derives local coordinates representing displacement vectors in local coordinate systems corresponding to the vertex normal vectors;
a displacement video coding unit that codes a displacement video including, as frames, 2D images storing the local coordinates as the displacement vectors;
a method designation flag generation unit that generates a method designation flag which designates the set derivation method; and
a method designation flag coding unit that codes the method designation flag, wherein
the base mesh is a mesh that is generated by decimating vertices of an original mesh to be coded including the vertices and connections representing a three-dimensional structure of an object and that is coarser than the original mesh,
the displacement vectors are differences in position between the vertices of the subdivided base mesh and the vertices of the original mesh, and
the local coordinate systems are coordinate systems for each of the vertices of the subdivided base mesh set on a basis of the vertex normal vectors.

20. An information processing method comprising:
setting a method for deriving vertex normal vectors, which are normal vectors of vertices of a subdivided base mesh;
deriving the vertex normal vectors by the set derivation method;
deriving local coordinates representing displacement vectors in local coordinate systems corresponding to the vertex normal vectors;
coding a displacement video including, as frames, 2D images storing the local coordinates as the displacement vectors;
generating a method designation flag that designates the set derivation method; and
coding the method designation flag, wherein
the base mesh is a mesh that is generated by decimating vertices of an original mesh to be coded including the vertices and connections representing a three-dimensional structure of an object and that is coarser than the original mesh,
the displacement vectors are difference in position between the vertices of the subdivided base mesh and the vertices of the original mesh, and
the local coordinate systems are coordinate systems for each of the vertices of the subdivided base mesh set on a basis of the vertex normal vectors.
